(19) Europäisches Patentamt European Patent Office Office européen des brevets

(11) **EP 4 507 396 A1**

(12) **EUROPEAN PATENT APPLICATION**
published in accordance with Art. 153(4) EPC

(43) Date of publication:
**12.02.2025 Bulletin 2025/07**

(21) Application number: **23795422.7**

(22) Date of filing: **25.04.2023**

(51) International Patent Classification (IPC):
***H04W 52/02*** (2009.01)

(52) Cooperative Patent Classification (CPC):
**H04W 52/02**

(86) International application number:
**PCT/CN2023/090624**

(87) International publication number:
**WO 2023/207990 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 CN 202210458433**
**30.05.2022 CN 202210600284**

(71) Applicant: **Huawei Technologies Co., Ltd.**
**Shenzhen, Guangdong 518129 (CN)**

(72) Inventors:
• **XUE, Yifan**
**Shenzhen, Guangdong 518129 (CN)**
• **XUE, Lixia**
**Shenzhen, Guangdong 518129 (CN)**
• **LI, Qiang**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **SIGNAL TRANSMISSION METHOD AND COMMUNICATION APPARATUS**

(57) A signal transmission method and a communication apparatus are provided. The method may include: A terminal device monitors a wake-up signal in a first time window, where the wake-up signal indicates information about at least one terminal device that needs to be woken up. The terminal device determines, based on a result of monitoring the wake-up signal in the first time window, whether to monitor the wake-up signal in a first time period after the first time window. In this way, duration of the first time window can be configured to be short to save energy. In addition, because a length of the first time window is short, a part of terminal devices may fail to be paged in the first time window. In this case, the terminal device may determine, based on the result of monitoring the wake-up signal in the first time window, whether to continue monitoring the wake-up signal in a period of time after the first time window, to reduce power consumption of the terminal device. The method provided in embodiments may be applied to a communication system, for example, a 5G communication system or an NR communication system, an LTE communication system, a V2X communication system, a D2D communication system, an M2M communication system, an MTC communication system, or an internet of things communication system.

FIG. 4

**Description**

This application claims priority to Chinese Patent Application No. 202210458433.6, filed with the China National Intellectual Property Administration on April 27, 2022 and entitled "SIGNAL MONITORING METHOD", which is incorporated herein by reference in its entirety.

This application claims priority to Chinese Patent Application No. 202210600284.2, filed with the China National Intellectual Property Administration on May 30, 2022 and entitled "SIGNAL TRANSMISSION METHOD AND COMMUNICATION APPARATUS", which is incorporated herein by reference in its entirety.

**TECHNICAL FIELD**

This application relates to the communication field, and more specifically, to a signal transmission method and a communication apparatus.

**BACKGROUND**

A terminal device may receive a wake-up signal through a separate low-power small circuit such as a wake up radio (wake up radio, WUR), and a main receiver may be in a deep sleep state. After the terminal device detects the wake-up signal through the WUR, the terminal device triggers wake-up of the main receiver. After the main receiver wakes up, the terminal device may perform a paging (paging) receiving process by using the main receiver, for example, receive a paging message.

However, if the terminal device keeps receiving the wake-up signal through the WUR, large power consumption is caused to the terminal device.

**SUMMARY**

This application provides a signal transmission method and a communication apparatus, so that power consumption and a delay of a terminal device can be both considered.

According to a first aspect, a signal transmission method is provided. The method may be performed by a terminal device, or may be performed by a component (for example, a chip or a circuit) of a terminal device. This is not limited. For ease of description, an example in which the method is performed by the terminal device is used below for description.

The method may include: The terminal device monitors a wake-up signal in a first time window, where the wake-up signal indicates information about at least one terminal device that needs to be woken up. The terminal device determines, based on a result of monitoring the wake-up signal in the first time window, whether to monitor the wake-up signal in a first time period after the first time window.

Based on the foregoing technical solution, the terminal device may determine, based on the result of monitoring the wake-up signal in the first time window, whether to continue monitoring the wake-up signal in a period of time after the first time window. In this way, duration of the first time window can be configured to be short to save energy. In addition, if the terminal device determines, based on the result of monitoring the wake-up signal in the first time window, not to monitor the wake-up signal in the first time period after the first time window, the terminal device may not need to continue monitoring the wake-up signal in the first time period after the first time window, to reduce power consumption of the terminal device.

Further, optionally, if a length of the first time window is short, a part of terminal devices may fail to be woken up in the first time window. For the part of terminal devices, a network device may send a corresponding wake-up signal in the period of time after the first time window. Correspondingly, the terminal device may determine, based on the result of monitoring the wake-up signal in the first time window, whether to continue monitoring the wake-up signal in the period of time after the first time window. In this way, even if the part of terminal devices cannot be woken up in the first time window, the part of terminal devices may be woken up in the period of time (that is, the first time period) after the first time window. In comparison with that the part of terminal devices need to be woken up in a next time window or another time window (for example, an interval between time windows is long, for another example, in the next time window or another time window, another terminal device may need to be woken up first, and then the part of terminal devices are woken up), the solution of this embodiment of this application can further reduce a delay caused by waking up the terminal device.

With reference to the first aspect, in some implementations of the first aspect, the first time window includes N time units, and N is an integer greater than 1 or equal to 1. That the terminal device determines, based on a result of monitoring the wake-up signal in the first time window, whether to monitor the wake-up signal in a first time period after the first time window includes: If the terminal device detects the wake-up signal in each time unit in the first time window, the terminal device monitors the wake-up signal in the first time period; or if the terminal device detects no wake-up signal in at least one time unit in the first time window, the terminal device skips monitoring the wake-up signal in the first time period.

Based on the foregoing technical solution, considering that if the terminal device detects the wake-up signal in each time unit in the first time window, a large amount of paging information may need to be sent. Therefore, the terminal device may continue monitoring the wake-up signal in the first time period, so that the network device can quickly send, in the first time period, the wake-up signal that fails to be sent in the first time window, to reduce a delay. If the terminal device detects no wake-up signal in at least one time unit in the first time window, it is very likely that paging information that needs to be sent has been completely sent in the first time window. Therefore, the terminal device may not need to continue monitoring the wake-up signal in the first time period, so that monitoring time of the terminal device is shortened and power consumption of the terminal device is reduced.

With reference to the first aspect, in some implementations of the first aspect, the first time window includes N time units, and N is an integer greater than 1 or equal to 1. That the terminal device determines, based on a result of monitoring the wake-up signal in the first time window, whether to monitor the wake-up signal in a first time period after the first time window includes: If the terminal device detects no wake-up signal in last N1 time units in the first time window, the terminal device skips monitoring the wake-up signal in the first time period; or if the terminal device detects the wake-up signal in last N1 time units in the first time window, the terminal device monitors the wake-up signal in the first time period. N1 is an integer greater than 1 or equal to 1, and N1 is less than N.

Based on the foregoing technical solution, it is considered that wake-up signals of some terminal devices arrive in the middle or at the tail of the first time window, that is, arrive at the last N1 time units, and the wake-up signals cannot be completely sent before an end position of the first time window. Therefore, if the terminal device detects the wake-up signal in the last N1 time units in the first time window, the terminal device may continue monitoring the wake-up signal in the first time period, so that the network device can quickly send, in the first time period, the wake-up signal that fails to be sent in the first time window, to reduce a delay. If the terminal device detects no wake-up signal in the last N1 time units in the first time window, it is very likely that the wake-up signal that needs to be sent has been completely sent in the first time window. Therefore, the terminal device may not need to continue monitoring the wake-up signal in the first time period, so that monitoring time of the terminal device is shortened and power consumption of the terminal device is reduced.

With reference to the first aspect, in some implementations of the first aspect, the first time window includes N time units, and N is an integer greater than 1 or equal to 1. That the terminal device determines, based on a result of monitoring the wake-up signal in the first time window, whether to monitor the wake-up signal in a first time period after the first time window includes: If the terminal device detects no wake-up signal in N2 time units in the first time window, the terminal device skips monitoring the wake-up signal in the first time period; or if the terminal device detects the wake-up signal in N2 time units in the first time window, the terminal device monitors the wake-up signal in the first time period. N2 is an integer greater than 1 or equal to 1, and N2 is less than N.

Based on the foregoing technical solution, considering that if the terminal device detects the wake-up signal in all the N2 time units in the first time window, a large quantity of wake-up signals may need to be sent. Therefore, the terminal device may continue monitoring the wake-up signal in the first time period, so that the network device can quickly send, in the first time window, the wake-up signal that fails to be sent in the first time window, to reduce a delay. If the terminal device detects no wake-up signal in the N2 time units in the first time window, it is very likely that the wake-up signal that needs to be sent has been completely sent in the first time window, or there are few wake-up signals in the first time window. Therefore, the terminal device may not need to continue monitoring the wake-up signal in the first time period, so that monitoring time of the terminal device is shortened and power consumption of the terminal device is reduced.

With reference to the first aspect, in some implementations of the first aspect, the first time window includes N time units, and N is an integer greater than 1 or equal to 1. That the terminal device determines, based on a result of monitoring the wake-up signal in the first time window, whether to monitor the wake-up signal in a first time period after the first time window includes: If the terminal device detects no wake-up signal in all N3 time units in the first time window, the terminal device skips monitoring the wake-up signal in the first time period; or if the terminal device detects the wake-up signal in at least one time unit in N3 time units in the first time window, the terminal device monitors the wake-up signal in the first time period. N3 is an integer greater than 1 or equal to 1, and N3 is less than N.

Based on the foregoing technical solution, it is considered that wake-up signals of some terminal devices arrive in the middle or at the tail of the first time window, that is, arrive at the last N3 time units or a time unit in the last N3 time units, and the wake-up signals cannot be completely sent before an end position of the first time window. Therefore, if the terminal device detects the wake-up signal in at least one time unit in the last N3 time units in the first time window, the terminal device may continue monitoring the wake-up signal in the first time period, so that the network device can quickly send, in the first time period, the wake-up signal that fails to be sent in the first time window, to reduce a delay. If the terminal device detects no wake-up signal in all the last N3 time units in the first time window, it is very likely that the wake-up signal that needs to be sent has been completely sent in the first time window. Therefore, the terminal device may not need to continue monitoring the wake-up signal in the first time period, so that monitoring time of the terminal device is shortened and power consumption of the terminal device is reduced.

With reference to the first aspect, in some implementations of the first aspect, the information about the at least one terminal device that needs to be woken up is an identifier of the at least one terminal device that needs to be woken up. That the terminal device monitors a wake-up signal in a first time window includes: The terminal device detects the wake-up signal in the first time window, where the identifier that is indicated by the wake-up signal and that is of the at least one terminal device that needs to be woken up includes a first identifier. That the terminal device determines, based on a result of monitoring the wake-up signal in the first time window, whether to monitor the wake-up signal in a first time period after the first time window includes: The terminal device determines, based on an identifier of the terminal device and the first identifier, whether to monitor the wake-up signal in the first time period.

Based on the foregoing technical solution, the network device may send the wake-up signal according to a specific rule. In this way, the terminal device may determine, based on the identifier of the terminal device and the identifier indicated by the wake-up signal, whether to monitor the wake-up signal in the first time period.

With reference to the first aspect, in some implementations of the first aspect, when the terminal device detects at least two wake-up signals in the first time window, an identifier that is of a terminal device and that is indicated by a wake-up signal detected later is larger than an identifier that is of a terminal device and that is indicated by a wake-up signal detected earlier.

Based on the foregoing technical solution, the network device may send the wake-up signal in ascending order of identifiers of terminal devices. In this way, the terminal device may determine, by comparing the identifier of the terminal device with the identifier indicated by the wake-up signal, whether to monitor the wake-up signal in the first time period.

With reference to the first aspect, in some implementations of the first aspect, that the terminal device determines, based on an identifier of the terminal device and the first identifier, whether to monitor the wake-up signal in the first time period includes: If the identifier of the terminal device is larger than the first identifier, the terminal device monitors the wake-up signal in the first time period; or if the identifier of the terminal device is smaller than the first identifier, the terminal device skips monitoring the wake-up signal in the first time period, or the terminal device stops monitoring the wake-up signal in the first time window and skips monitoring the wake-up signal in the first time period.

With reference to the first aspect, in some implementations of the first aspect, when the terminal device detects at least two wake-up signals in the first time window, an identifier that is of a terminal device and that is indicated by a wake-up signal detected later is smaller than an identifier that is of a terminal device and that is indicated by a wake-up signal detected earlier.

Based on the foregoing technical solution, the network device may send the wake-up signal in descending order of identifiers of terminal devices. In this way, the terminal device may determine, by comparing the identifier of the terminal device with the identifier indicated by the wake-up signal, whether to monitor the wake-up signal in the first time period.

With reference to the first aspect, in some implementations of the first aspect, that the terminal device determines, based on an identifier of the terminal device and the first identifier, whether to monitor the wake-up signal in the first time period includes: If the identifier of the terminal device is smaller than the first identifier, the terminal device monitors the wake-up signal in the first time period; or if the identifier of the terminal device is larger than the first identifier, the terminal device skips monitoring the wake-up signal in the first time period, or the terminal device stops monitoring the wake-up signal in the first time window and skips monitoring the wake-up signal in the first time period.

With reference to the first aspect, in some implementations of the first aspect, when the terminal device detects the at least two wake-up signals in the first time window, the identifier that is of the terminal device and that is indicated by the wake-up signal detected later is larger than the identifier that is of the terminal device and that is indicated by the wake-up signal detected earlier; and when the terminal device detects at least two wake-up signals in the first time period, an identifier that is of a terminal device and that is indicated by a wake-up signal detected later is smaller than an identifier that is of a terminal device and that is indicated by a wake-up signal detected earlier.

Based on the foregoing technical solution, the network device sends the wake-up signal in ascending order of the identifiers of the terminal devices in the first time window, and sends the wake-up signal in descending order of the identifiers of the terminal devices in the first time period.

With reference to the first aspect, in some implementations of the first aspect, when the terminal device detects the at least two wake-up signals in the first time window, the identifier that is of the terminal device and that is indicated by the wake-up signal detected later is smaller than the identifier that is of the terminal device and that is indicated by the wake-up signal detected earlier; and when the terminal device detects at least two wake-up signals in the first time period, an identifier that is of a terminal device and that is indicated by a wake-up signal detected later is larger than an identifier that is of a terminal device and that is indicated by a wake-up signal detected earlier.

Based on the foregoing technical solution, the network device sends the wake-up signal in descending order of the identifiers of the terminal devices in the first time window, and sends the wake-up signal in ascending order of the identifiers of the terminal devices in the first time period.

With reference to the first aspect, in some implementations of the first aspect, that the terminal device monitors a wake-up signal in a first time window includes: The terminal device detects first information in the first time window, where the first information indicates to stop monitoring the wake-up signal. That the terminal device determines, based on a result of monitoring the wake-up signal in the first time window, whether to monitor the wake-up signal in a first time period after the first time window includes: The terminal device skips, based on the first information, monitoring the wake-up signal in the first time period, or stops monitoring the wake-up signal in the first time window and skips monitoring the wake-up signal in the first time period.

Based on the foregoing technical solution, when the network device determines that no paging information needs to be sent, for example, no terminal device needs to be paged, or paging in a cache has been completely sent, the network device may send the first information, to indicate the terminal device to stop monitoring the wake-up signal, to reduce power consumption of the terminal device.

With reference to the first aspect, in some implementations of the first aspect, a start position of the first time period is the same as an end position of the first time window.

With reference to the first aspect, in some implementations of the first aspect, the end position of the first time window overlaps a start position of a second time window, or the end position of the first time window precedes a start position of a second time window. The second time window is a corresponding time window when a second terminal device monitors the wake-up signal, and the first time window and the second time window are adjacent time windows.

With reference to the first aspect, in some implementations of the first aspect, the method further includes: The terminal device receives configuration information, where the configuration information includes at least one of the following: information about the first time window or information about the first time period.

With reference to the first aspect, in some implementations of the first aspect, a time length of the first time period is the same as a time length of the first time window.

According to a second aspect, a signal transmission method is provided. The method may be performed by a terminal device, or may be performed by a component (for example, a chip or a circuit) of a terminal device. This is not limited. For ease of description, an example in which the method is performed by the terminal device is used below for description.

The method may include: The terminal device monitors a wake-up signal in a first time window, where the wake-up signal indicates information about at least one terminal device that needs to be woken up. The terminal device determines, based on a result of monitoring the wake-up signal in a part of duration in the first time window, whether to continue monitoring the wake-up signal in the first time window.

Based on the foregoing technical solution, the terminal device may determine, based on the result of monitoring the wake-up signal in the part of duration in the first time window, whether to continue monitoring the wake-up signal in the first time window. In this way, duration of the first time window may be configured to be long, to avoid a case in which a part of terminal devices cannot be woken up in the first time window. In addition, the terminal device may determine, based on the result of monitoring the wake-up signal in the part of duration in the first time window, whether to continue monitoring the wake-up signal in the first time window, to reduce power consumption of the terminal device.

With reference to the second aspect, in some implementations of the second aspect, the information about the at least one terminal device that needs to be woken up is an identifier of the at least one terminal device that needs to be woken up. That the terminal device monitors a wake-up signal in a first time window includes: The terminal device detects the wake-up signal in the first time window, where the identifier that is indicated by the wake-up signal and that is of the at least one terminal device that needs to be woken up includes a first identifier. That the terminal device determines, based on a result of monitoring the wake-up signal in a part of duration in the first time window, whether to continue monitoring the wake-up signal in the first time window includes: The terminal device determines, based on an identifier of the terminal device and the first identifier, whether to continue monitoring the wake-up signal in the first time window.

Based on the foregoing technical solution, a network device may send the wake-up signal according to a specific rule. In this way, the terminal device may determine, based on the identifier of the terminal device and the identifier indicated by the wake-up signal, whether to continue monitoring the wake-up signal in the first time window. In this way, the duration of the first time window may be configured to be long, to avoid a case in which a part of terminal devices cannot be woken up in the first time window. In addition, the terminal device may determine, based on the identifier of the terminal device and the identifier indicated by the wake-up signal, whether to continue monitoring the wake-up signal in the first time window, to reduce the power consumption of the terminal device.

With reference to the second aspect, in some implementations of the second aspect, when the terminal device detects at least two wake-up signals in the first time window, an identifier that is of a terminal device and that is indicated by a wake-up signal detected later is larger than an identifier that is of a terminal device and that is indicated by a wake-up signal detected earlier.

Based on the foregoing technical solution, the network device may send the wake-up signal in ascending order of identifiers of terminal devices. In this way, the terminal device may determine, by comparing the identifier of the terminal device with the identifier indicated by the wake-up signal, whether to continue monitoring the wake-up signal in the first time window.

With reference to the second aspect, in some implementations of the second aspect, that the terminal device determines, based on an identifier of the terminal device and the first identifier, whether to continue monitoring the wake-up signal in the first time window includes: If the identifier of the terminal device is larger than the first identifier, the terminal device continues monitoring the wake-up signal in the first time window; or if the identifier of the terminal device is smaller than the first identifier, the terminal device stops monitoring the wake-up signal in the first time window.

With reference to the second aspect, in some implementations of the second aspect, when the terminal device detects at least two wake-up signals in the first time window, an identifier that is of a terminal device and that is indicated by a wake-up signal detected later is smaller than an identifier that is of a terminal device and that is indicated by a wake-up signal detected earlier.

Based on the foregoing technical solution, the network device may send the wake-up signal in descending order of identifiers of terminal devices. In this way, the terminal device may determine, by comparing the identifier of the terminal device with the identifier indicated by the wake-up signal, whether to continue monitoring the wake-up signal in the first time window.

With reference to the second aspect, in some implementations of the second aspect, that the terminal device determines, based on an identifier of the terminal device and the first identifier, whether to continue monitoring the wake-up signal in the first time window includes: If the identifier of the terminal device is smaller than the first identifier, the terminal device continues monitoring the wake-up signal in the first time window; or if the identifier of the terminal device is larger than the first identifier, the terminal device stops monitoring the wake-up signal in the first time window.

With reference to the second aspect, in some implementations of the second aspect, when the terminal device detects at least two wake-up signals in the first time window of a first periodicity, an identifier that is of a terminal device and that is indicated by a wake-up signal detected later is larger than an identifier that is of a terminal device and that is indicated by a wake-up signal detected earlier; and when the terminal device detects at least two wake-up signals in the first time window of a second periodicity, an identifier that is of a terminal device and that is indicated by a wake-up signal detected later is smaller than an identifier that is of a terminal device and that is indicated by a wake-up signal detected earlier. The first periodicity and the second periodicity are adjacent.

Based on the foregoing technical solution, for example, the wake-up signal indicates paging information of the terminal device, and the network device sends the paging information in ascending order of the identifiers of the terminal devices. A terminal device with a smaller identifier can determine earlier that the terminal device is not to be paged, to obtain a larger energy saving benefit, while a terminal device with a larger identifier usually needs to perform monitoring for a longer time, or even performs monitoring in an entire time window. Therefore, the foregoing problem can be resolved by sending the wake-up signal in ascending order in the first time window of the first periodicity, and sending the wake-up signal in descending order in the first time window of a next periodicity (that is, the second periodicity).

With reference to the second aspect, in some implementations of the second aspect, when the terminal device detects at least two wake-up signals in the first time window of a first periodicity, an identifier that is of a terminal device and that is indicated by a wake-up signal detected later is smaller than an identifier that is of a terminal device and that is indicated by a wake-up signal detected earlier; and when the terminal device detects at least two wake-up signals in the first time window of a second periodicity, an identifier that is of a terminal device and that is indicated by a wake-up signal detected later is larger than an identifier that is of a terminal device and that is indicated by a wake-up signal detected earlier. The first periodicity and the second periodicity are adjacent.

Based on the foregoing technical solution, for example, the wake-up signal indicates paging information of the terminal device, and the network device sends the paging information in ascending order of the identifiers of the terminal devices. A terminal device with a smaller identifier can determine earlier that the terminal device is not to be paged, to obtain a larger energy saving benefit, while a terminal device with a larger identifier usually needs to perform monitoring for a longer time, or even performs monitoring in an entire time window. Therefore, the foregoing problem can be resolved by sending the wake-up signal in descending order in the first time window of the first periodicity, and sending the wake-up signal in ascending order in the first time window of a next periodicity (that is, the second periodicity).

With reference to the second aspect, in some implementations of the second aspect, that the terminal device monitors a wake-up signal in a first time window includes: The terminal device detects first information in the first time window, where the first information indicates to stop monitoring the wake-up signal. That the terminal device determines, based on a result of monitoring the wake-up signal in a part of duration in the first time window, whether to continue monitoring the wake-up signal in the first time window includes: The terminal device stops, based on the first information, monitoring the wake-up signal in the first time window.

Based on the foregoing technical solution, when the network device determines that no paging information needs to be sent, for example, no terminal device needs to be paged, or paging in a cache has been completely sent, the network device may send the first information, to indicate the terminal device to stop monitoring the wake-up signal, to reduce power consumption of the terminal device.

With reference to the second aspect, in some implementations of the second aspect, an end position of the first time window overlaps a start position of a second time window, or an end position of the first time window precedes a start position of a second time window. The second time window is a corresponding time window when a second terminal device monitors the wake-up signal, and the first time window and the second time window are adjacent time windows.

With reference to the second aspect, in some implementations of the second aspect, the method further includes: The terminal device receives configuration information, where the configuration information includes information about the first time window.

According to a third aspect, a signal transmission method is provided. The method may be performed by a network device, or may be performed by a component (for example, a chip or a circuit) of a network device. This is not limited. For ease of description, an example in which the method is performed by the network device is used below for description.

The method may include: The network device sends a wake-up signal in a first time window, where the wake-up signal indicates an identifier of at least one terminal device that needs to be woken up. The network device determines, based on a status of sending the wake-up signal in the first time window, whether to send the wake-up signal in a first time period after the first time window.

For example, determining whether to send the wake-up signal in the first time period after the first time window means: determining whether the wake-up signal may be sent in the first time period after the first time window, or determining whether the wake-up signal is allowed to be sent in the first time period after the first time window, or determining whether the wake-up signal can be sent in the first time period after the first time window. For example, determining to send the wake-up signal in the first time period after the first time window means determining that the wake-up signal may be sent in the first time period after the first time window, or means determining that the wake-up signal is allowed to be sent in the first time period after the first time window, or means determining that the wake-up signal can be sent in the first time period after the first time window.

With reference to the third aspect, in some implementations of the third aspect, the first time window includes N time units, and N is an integer greater than 1 or equal to 1. That the network device determines, based on a status of sending the wake-up signal in the first time window, whether to send the wake-up signal in a first time period after the first time window includes: If the network device sends the wake-up signal in each time unit in the first time window, the network device determines to send the wake-up signal in the first time period; or if the network device skips sending the wake-up signal in at least one time unit in the first time window, the network device determines not to send the wake-up signal in the first time period.

With reference to the third aspect, in some implementations of the third aspect, the first time window includes N time units, and N is an integer greater than 1 or equal to 1. That the network device determines, based on a status of sending the wake-up signal in the first time window, whether to send the wake-up signal in a first time period after the first time window includes: If the network device does not send the wake-up signal in last N1 time units in the first time window, the network device determines not to send the wake-up signal in the first time period; or if the network device sends the wake-up signal in last N1 time units in the first time window, the network device determines to send the wake-up signal in the first time period. N1 is an integer greater than 1 or equal to 1, and N1 is less than N.

With reference to the third aspect, in some implementations of the third aspect, the first time window includes N time units, and N is an integer greater than 1 or equal to 1. That the network device determines, based on a status of sending the wake-up signal in the first time window, whether to send the wake-up signal in a first time period after the first time window includes: If the network device does not send the wake-up signal in N2 time units in the first time window, the network device determines not to send the wake-up signal in the first time period; or if the network device sends the wake-up signal in N2 time units in the first time window, the network device determines to send the wake-up signal in the first time period. N2 is an integer greater than 1 or equal to 1, and N2 is less than N.

With reference to the third aspect, in some implementations of the third aspect, the first time window includes N time units, and N is an integer greater than 1 or equal to 1. That the network device determines, based on a status of sending the wake-up signal in the first time window, whether to send the wake-up signal in a first time period after the first time window includes: If the network device does not send the wake-up signal in all last N3 time units in the first time window, the network device determines not to send the wake-up signal in the first time period; or if the network device sends the wake-up signal in at least one time unit in last N3 time units in the first time window, the network device determines to send the wake-up signal in the first time period. N3 is an integer greater than 1 or equal to 1, and N3 is less than N.

With reference to the third aspect, in some implementations of the third aspect, the information about the at least one terminal device that needs to be woken up is an identifier of the at least one terminal device that needs to be woken up. An identifier that is of a terminal device and that is indicated by a wake-up signal sent by the network device later in the first time window is larger than an identifier that is of a terminal device and that is indicated by a wake-up signal sent earlier; or an identifier that is of a terminal device and that is indicated by a wake-up signal sent by the network device later in the first time window is smaller than an identifier that is of a terminal device and that is indicated by a wake-up signal sent earlier.

With reference to the third aspect, in some implementations of the third aspect, the identifier that is of the terminal device and that is indicated by the wake-up signal sent by the network device later in the first time window is larger than the identifier that is of the terminal device and that is indicated by the wake-up signal sent earlier in the first time window. The method further includes: The network device sends the wake-up signal in the first time period, where an identifier that is of a terminal device and that is indicated by a wake-up signal sent by the network device later in the first time period is smaller than an identifier that is of a terminal device and that is indicated by a wake-up signal sent earlier in the first time period.

With reference to the third aspect, in some implementations of the third aspect, the identifier that is of the terminal device and that is indicated by the wake-up signal sent by the network device later in the first time window is smaller than the identifier that is of the terminal device and that is indicated by the wake-up signal sent earlier in the first time window. The method further includes: The network device sends the wake-up signal in the first time period, where an identifier that is of a terminal device and that is indicated by a wake-up signal sent by the network device later in the first time period is larger than an identifier that is of a terminal device and that is indicated by a wake-up signal sent earlier in the first time period.

With reference to the third aspect, in some implementations of the third aspect, the method further includes: The network device sends first information in the first time window, where the first information indicates to stop monitoring the wake-up signal.

With reference to the third aspect, in some implementations of the third aspect, the method further includes: The network device determines, based on the first information, not to send the wake-up signal in the first time period, or determining to stop sending the wake-up signal in the first time window and not to send the wake-up signal in the first time period.

With reference to the third aspect, in some implementations of the third aspect, the method further includes: The network device sends the wake-up signal in a second time window, where the first time window and the second time window are adjacent, and an end position of the first time window overlaps a start position of the second time window, or an end position of the first time window precedes a start position of the second time window.

With reference to the third aspect, in some implementations of the third aspect, the method further includes: The network device sends configuration information, where the configuration information includes at least one of the following: information about the first time window or information about the first time period.

With reference to the third aspect, in some implementations of the third aspect, a start position of the first time period is the same as an end position of the first time window.

With reference to the third aspect, in some implementations of the third aspect, a time length of the first time period is the same as a time length of the first time window.

For beneficial effects of the third aspect and the possible designs, refer to related descriptions of the first aspect. Details are not described herein again.

According to a fourth aspect, a signal transmission method is provided. The method may be performed by a network device, or may be performed by a component (for example, a chip or a circuit) of a network device. This is not limited. For ease of description, an example in which the method is performed by the network device is used below for description.

The method may include: The network device sends a wake-up signal in a first time window, where the wake-up signal indicates an identifier of at least one terminal device that needs to be woken up. An identifier that is of a terminal device and that is indicated by a wake-up signal sent by the network device later in the first time window is larger than an identifier that is of a terminal device and that is indicated by a wake-up signal sent earlier; or an identifier that is of a terminal device and that is indicated by a wake-up signal sent by the network device later in the first time window is smaller than an identifier that is of a terminal device and that is indicated by a wake-up signal sent earlier.

With reference to the fourth aspect, in some implementations of the fourth aspect, the method further includes: The network device sends first information in the first time window, where the first information indicates to stop monitoring the wake-up signal.

With reference to the fourth aspect, in some implementations of the fourth aspect, the method further includes: The network device determines, based on the first information, to stop sending the wake-up signal in the first time window.

With reference to the fourth aspect, in some implementations of the fourth aspect, when the network device sends at least two wake-up signals in the first time window of a first periodicity, an identifier that is of a terminal device and that is indicated by a wake-up signal sent later is larger than an identifier that is of a terminal device and that is indicated by a wake-up signal sent earlier; and when the network device sends at least two wake-up signals in the first time window of a second periodicity, an identifier that is of a terminal device and that is indicated by a wake-up signal sent later is smaller than an identifier that is of a terminal device and that is indicated by a wake-up signal sent earlier. The first periodicity and the second periodicity are adjacent.

With reference to the fourth aspect, in some implementations of the fourth aspect, when the network device sends at least two wake-up signals in the first time window of a first periodicity, an identifier that is of a terminal device and that is indicated by a wake-up signal sent later is smaller than an identifier that is of a terminal device and that is indicated by a wake-up signal sent earlier; and when the network device sends at least two wake-up signals in the first time window of a second periodicity, an identifier that is of a terminal device and that is indicated by a wake-up signal sent later is larger than an identifier that is of a terminal device and that is indicated by a wake-up signal sent earlier. The first periodicity and the second periodicity are adjacent.

With reference to the fourth aspect, in some implementations of the fourth aspect, the method further includes: The network device sends the wake-up signal in a second time window, where the first time window and the second time window are adjacent, and an end position of the first time window overlaps a start position of the second time window, or an end position of the first time window precedes a start position of the second time window.

With reference to the fourth aspect, in some implementations of the fourth aspect, the method further includes: The network device sends configuration information, where the configuration information includes information about the first time window.

For beneficial effects of the fourth aspect and the possible designs, refer to related descriptions of the second aspect. Details are not described herein again.

According to a fifth aspect, a communication apparatus is provided. The apparatus is configured to perform the method provided in any one of the first aspect to the fourth aspect. Specifically, the apparatus may include a unit and/or module configured to perform the method provided in any one of the foregoing implementations of any one of the first aspect to the fourth aspect, for example, a processing unit and/or a communication unit.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The apparatus includes: a memory, configured to store a program; and at least one processor, configured to execute a computer program or instructions stored in the memory, to perform the method provided in any one of the foregoing implementations of any one of the first aspect to the fourth aspect.

In an implementation, the apparatus is a communication device (for example, a terminal device or a network device).

In another implementation, the apparatus is a chip, a chip system, or a circuit used in a communication device (for example, a terminal device or a network device).

According to a seventh aspect, this application provides a processor, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device, and the program code includes the method provided in any one of the foregoing implementations of any one of the first aspect to the fourth aspect.

According to a ninth aspect, a computer program product including instructions is provided. When the computer program product runs on a computer, the computer is enabled to perform the method provided in any one of the foregoing implementations of any one of the first aspect to the fourth aspect.

According to a tenth aspect, a chip is provided. The chip includes a processor and a communication interface. The processor reads, through the communication interface, instructions stored in a memory, to perform the method provided in any one of the foregoing implementations of any one of the first aspect to the fourth aspect.

Optionally, in an implementation, the chip further includes the memory. The memory stores a computer program or the instructions. The processor is configured to execute the computer program or the instructions stored in the memory. When the computer program or the instructions is/are executed, the processor is configured to perform the method provided in any one of the foregoing implementations of any one of the first aspect to the fourth aspect.

According to an eleventh aspect, a communication system is provided, including the foregoing terminal device and the foregoing network device.

## BRIEF DESCRIPTION OF DRAWINGS

FIG. 1 is a diagram of a wireless communication system 100 applicable to an embodiment of this application;
FIG. 2 is a diagram in which a terminal device receives a wake-up signal through a wake-up circuit;
FIG. 3 is a diagram of a waveform of a wake-up signal during OOK modulation;
FIG. 4 is a diagram of a signal transmission method 400 according to an embodiment of this application;
FIG. 5 is a diagram of a time unit;

FIG. 6 is a diagram applicable to Manner 1;

FIG. 7 is a diagram applicable to Manner 2;

FIG. 8 is a diagram applicable to Manner 6;

FIG. 9 is a diagram in which time window boundaries of different terminal devices overlap;

FIG. 10 is a diagram in which time window boundaries of different terminal devices do not overlap;

FIG. 11 is a diagram of a signal transmission method 1100 according to another embodiment of this application;

FIG. 12 is a diagram applicable to Manner A;

FIG. 13 is another diagram applicable to Manner A;

FIG. 14 is a diagram of a communication apparatus 1400 according to an embodiment of this application;

FIG. 15 is a diagram of another communication apparatus 1500 according to an embodiment of this application; and

FIG. 16 is a diagram of a chip system 1600 according to an embodiment of this application.

## DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a sixth generation mobile communication system. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), and an internet of things (internet of things, IoT) communication system or another communication system.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, some examples of the terminal may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile communication network (public land mobile network, PLMN). This is not limited in embodiments of this application.

By way of example and not limitation, in embodiments of this application, the terminal device may alternatively be a wearable device. The wearable device may also be referred to as a wearable intelligent device, and is a generic term for wearable devices that are developed by applying a wearable technology to intelligent designs of daily wear, such as glasses, gloves, watches, clothes, and shoes. The wearable device is a portable device that can be directly worn on a body or integrated into clothes or an accessory of a user. The wearable device is not merely a hardware device, but is used to implement a powerful function through software support, data interaction, and cloud interaction. In a broad sense, the wearable intelligent device includes fullfeatured and large-sized devices that can implement all or some functions without depending on smartphones, for example, smart watches or smart glasses, and devices that focus on only one type of application function and that need to work with other devices such as smartphones, for example, various smart bands or smart jewelry for monitoring physical signs.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmission reception point, TRP), a transmission point (transmission point, TP), a master station, a secondary station, a multi-standard radio (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a radio frequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may be alternatively a communication module, a modem, or a chip disposed in the foregoing device or apparatus. The base station may be alternatively a mobile switching center, a device that undertakes a base station function in D2D, V2X, and M2M communication, a network side device in a 6G network, a device that undertakes a base station function in a future communication system, or the like. The base station may support networks of a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and at least one cell may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

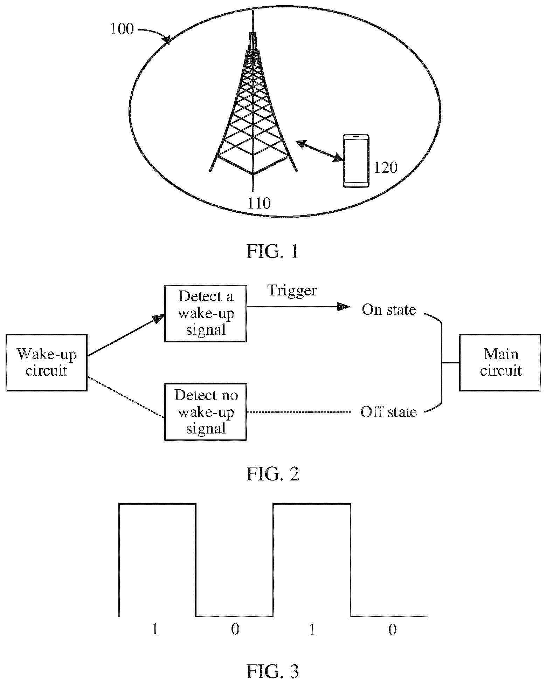

First, a network architecture applicable to this application is briefly described with reference to FIG. 1.

As example descriptions, FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for both the network device and the terminal device, and the network device and the terminal device may communicate with each other by using a multi-antenna technology.

When the network device communicates with the terminal device, the network device may manage at least one cell, and there may be an integer quantity of terminal devices in one cell. Optionally, the network device 110 and the terminal device 120 form a single-cell communication system. Without loss of generality, a cell is denoted as a cell #1. The network device 110 may be a network device in the cell #1, or the network device 110 may serve a terminal device (for example, the terminal device 120) in the cell #1.

It should be noted that the cell may be understood as an area within coverage of a radio signal of the network device.

It should be understood that FIG. 1 is merely a simplified diagram of an example for ease of understanding. The wireless communication system 100 may further include another network device or may further include another terminal device, which is not shown in FIG. 1. Embodiments of this application are applicable to any communication scenario in which a transmit end device communicates with a receive end device.

To facilitate understanding of embodiments of this application, terms in this application are briefly described.

1. Paging (paging)

When the terminal device is in an idle (idle) state or an inactive (inactive) state, the terminal device may periodically receive paging. For example, a paging receiving procedure performed by the terminal device includes the following steps.

(1) The terminal device may obtain, through calculation based on an identifier (identifier, ID) (UE ID) of the terminal device, a paging frame (paging frame, PF) and a position of a paging occasion (paging occasion, PO) in the PF.
(2) The terminal device monitors a physical downlink control channel (physical downlink control channel, PDCCH) (for example, which may also be referred to as a paging PDCCH) in the PO. The PDCCH includes downlink control information (downlink control information, DCI) (for example, which may also be referred to as paging DCI).

(3) If the terminal device detects the PDCCH, the terminal device receives a physical downlink shared channel (physical downlink shared channel, PDSCH) (for example, which may also be referred to as a paging PDSCH) at a position at which the PDCCH is scheduled. The paging PDSCH includes a paging message (paging message), and the paging message may indicate which terminal devices are paged. For example, the paging PDSCH includes a maximum of 32 paging records (paging records), each paging record may include one UE ID, and the UE ID indicates which UE is paged.

Paging may be classified into two types. One is core network paging (CN paging) and the other is access network paging (RAN paging).

(1) The core network paging is paging received when the UE is in the idle state, and is initiated by a core network. The core network sends a UE ID of a paged UE to a network device that is to send paging information. For the core network paging, the UE ID is a 5G system architecture evolution (system architecture evolution, SAE) temporary mobile subscriber identity (5G SAE temporary mobile subscriber identity, 5G-S-TMSI), and a length is, for example, 48 bits. The 5G-S-TMSI may be allocated by an access and mobility management function (access and mobility management function, AMF).

(2) The access network paging is paging received when the UE is in the inactive state, and is initiated by a network device. The network device may send a UE ID of a paged UE to another network device that is to send paging information. The network device is a base station corresponding to a cell in which the UE is located when the UE switches from a connected (connected) state to the inactive state. The cell may also be referred to as a last serving cell (last serving cell). For the access network paging, the UE ID is an inactive radio network temporary identifier (inactive radio network temporary identifier, I-RNTI), and a length is, for example, 40 bits. The I-RNTI may be allocated by the last serving cell.

It should be understood that the foregoing paging receiving procedure is merely an example for description. For example, refer to a related standard. This is not limited in this application.

2. Main circuit and wake-up circuit

Generally, regardless of whether the terminal device performs the paging receiving procedure in the idle state or the inactive state, or the terminal device receives data in the connected state, a same receiving module, a same receiver, or a same receiver circuit is used. In this application, for ease of description, a module that completes these functions or performs related steps is referred to as the main circuit. It may be understood that the main circuit is merely a name for differentiation, and a specific name does not limit the protection scope of this application. For ease of description, the main circuit is uniformly used for description below.

A signal received by the terminal device through the main circuit may be referred to as being transmitted on a main link. The main link represents a connection relationship between the terminal device and the network device, and is a logical concept rather than a physical entity. It may be understood that the main link is merely a name for differentiation, and a specific name does not limit the protection scope of this application.

When the terminal device receives paging through the main circuit, power consumption is high. For example, when receiving paging, the terminal device first needs to receive a downlink signal by using a receiving module of the main circuit, and then the terminal device further needs to perform blind detection on a PDCCH, decode a received PDSCH, and the like. All these cause high power consumption. In addition, because the main circuit is complex, reference power consumption or static power consumption during running of the main circuit is high.

To reduce power consumption caused by receiving the paging by the terminal device, in a possible method, the terminal device may receive a signal through a separate low-power small circuit, and the signal received by the terminal device through the low-power small circuit may be referred to as a low-power wake-up signal (low-power wake-up signal, LP-WUS) or a wake-up signal. For example, the wake-up signal may indicate paging-related information, and the paging-related information may include, for example, whether one terminal device or a group of terminal devices are paged. The low-power small circuit may be implemented by using a separate small circuit or chip with a simple structure, and power consumption of the small circuit is low. For example, the low-power small circuit may be referred to as a wake-up radio (wake-up radio, WUR), or may be referred to as a wake-up circuit, or may be referred to as a low-power circuit, or may be referred to as a wake-up receiver (wake-up receiver, WUR). A name of the low-power small circuit is not limited in this application. In this application, for ease of description, the low-power small circuit is referred to as a wake-up circuit. It may be understood that the wake-up circuit is merely a name for differentiation, and a specific name does not limit the protection scope of this application. For ease of description, the wake-up circuit is uniformly used for description below. In addition, for ease of description below, a signal received by the terminal device through the wake-up circuit is referred to as a wake-up signal.

The signal received by the terminal device through the wake-up circuit may be referred to as being transmitted on a wake-up link. The wake-up link represents a connection relationship between the terminal device and the network device, and is a logical concept rather than a physical entity. It may be understood that the wake-up link is merely a name for differentiation, and a specific name does not limit the protection scope of this application.

In an example, FIG. 2 is a diagram in which a terminal device receives a wake-up signal through a wake-up circuit.

As shown in FIG. 2, when the terminal device receives a signal through the wake-up circuit, if the terminal device detects no wake-up signal associated with the terminal device, the terminal device continues receiving a signal through the wake-up circuit, and a main circuit may be in an off state or a sleep state; or if the terminal device detects a wake-up signal associated with the terminal device, the terminal device triggers wake-up of a main circuit, that is, enables the main circuit to be in/switched to an on state. The on state may also be referred to as an operating state, or referred to as an active state. After the main circuit is turned on, the terminal device may perform a paging receiving process. For example, the terminal device receives a paging PDCCH, and receives a paging PDSCH after detecting the paging PDCCH on a PO corresponding to the terminal device. Alternatively, after the main circuit is turned on, the terminal device may directly perform an access procedure. In this case, the wake-up signal received through the wake-up circuit may directly indicate a paged UE. After turning on the main circuit, the terminal device does not need to receive paging through the main circuit, but directly initiates random access.

To ensure a power consumption gain, the wake-up signal may be modulated through on-off keying (on-off keying, OOK), or may be modulated through frequency shift keying (frequency shift keying, FSK). The following briefly describes the two modulation modes.

> (1) OOK: Information is modulated depending on whether a signal is sent, and a corresponding wake-up circuit may receive a signal by using an envelope detection method. In an OOK modulation technology, demodulation can be implemented by a receiver with extremely low complexity, so that a low power consumption objective of the wake-up circuit can be achieved.

In an example, FIG. 3 is a diagram of a waveform of a wake-up signal during OOK modulation.

When OOK modulation is used for a signal, each bit, that is, an encoded bit, may correspond to one symbol (symbol). A symbol may also be referred to as a chip (chip), or may be referred to as another name. This is not limited herein.

For example, when the bit is 1, a signal is sent in a symbol length (that is, signal transmit power is not 0 in the symbol length); or when the bit is 0, no signal is sent in a symbol length (that is, signal transmit power is 0 in the symbol length). As shown in FIG. 3, the waveform shown in FIG. 3 may represent four bits 1010.

For another example, when the bit is 0, a signal is sent in a symbol length (that is, signal transmit power is not 0 in the symbol length); or when the bit is 1, no signal is sent in a symbol length (that is, signal transmit power is 0 in the symbol length). In this case, the waveform shown in FIG. 3 may represent four bits 0101.

(2) FSK: a modulation technology that modulates information on a carrier frequency. When FSK modulation is used, one symbol may carry at least one piece of bit information. For example, it is assumed that an information bit that needs to be transmitted is a sequence including 0 and 1, and a modulated signal has four possible positions in frequency domain. For example, a signal whose sending frequency is $f_1$ represents that bits "00" are transmitted, a signal whose sending frequency is $f_2$ represents that bits "01" are transmitted, a signal whose sending frequency is $f_3$ represents that bits "10" are transmitted, and a signal whose sending frequency is $f_4$ represents that bits "11" are transmitted. At a receive end, a frequency discrimination circuit may be used to detect a frequency of a received signal. If it is detected that the signal frequency is $f_1$, it is determined that received bits are 00. If it is detected that the signal frequency is $f_2$, it is determined that received bits are 01. If it is detected that the signal frequency is $f_3$, it is determined that received bits are 10. If it is detected that the signal frequency is $f_4$, it is determined that received bits are 11.

The foregoing briefly describes terms used in this application, and details are not described in the following embodiments.

If the terminal device keeps receiving the wake-up signal on the wake-up link, large power consumption is also caused. Therefore, to further reduce power consumption of the terminal device, a discontinuous reception (discontinuous reception, DRX) working mode may be used on the wake-up link. For example, a network device may configure a monitoring window (monitoring window) of the wake-up signal, and the wake-up circuit of the terminal device monitors the wake-up signal in the monitoring window. In other words, the wake-up circuit of the terminal device does not need to monitor the wake-up signal outside the monitoring window. In this way, power consumption of the terminal device can be further reduced. If the monitoring window is configured too long, the power consumption gain is reduced. If the monitoring window is configured too short, delays of some terminal devices may be increased. For example, if 10 pieces of paging information can be transmitted in one monitoring window, but more than 10 terminal devices in a group of terminal devices corresponding to the monitoring window need to be paged, a part of terminal devices may fail to be paged in the current monitoring window, but are paged in a next monitoring window. In this case, a delay of the part of terminal devices is increased.

In view of this, this application provides a solution, so that both power consumption of the terminal device and the delay of the terminal device can be considered. For example, the terminal device may determine, based on a result of monitoring the wake-up signal in the time window, whether to monitor the wake-up signal in a period of time after the time window. For another example, the network device may send the wake-up signal according to a specific rule. For example, identifiers of terminal devices that are indicated by wake-up signals are arranged in ascending or descending order. In this way, the terminal device may determine, based on the identifier of the terminal device and an identifier of a monitored wake-up signal, whether to continue monitoring the wake-up signal.

It can be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following describes in detail a signal transmission method provided in embodiments of this application with reference to the accompanying drawings. Embodiments provided in this application may be applied to the network architecture shown in FIG. 1. This is not limited.

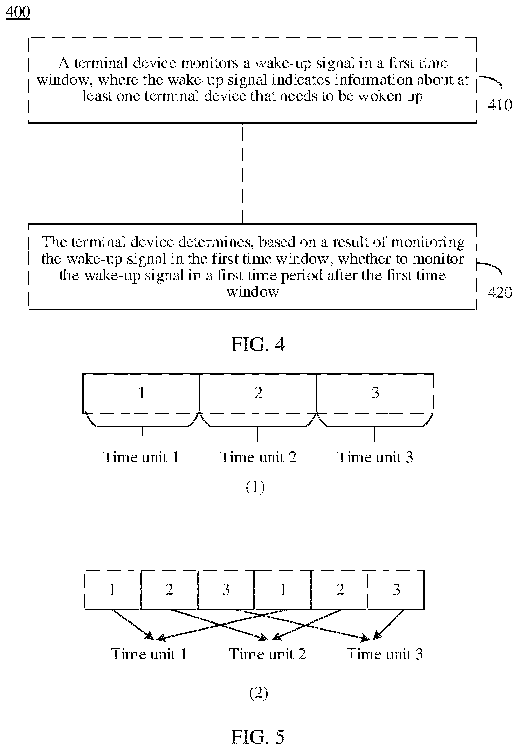

FIG. 4 is a diagram of a signal transmission method 400 according to an embodiment of this application. The method 400 may include the following steps.

410. A terminal device monitors a wake-up signal in a first time window, where the wake-up signal indicates information about at least one terminal device that needs to be woken up.

The wake-up signal is a signal received by the terminal device through a wake-up circuit. Specific content of the wake-up signal is not limited in this embodiment of this application. In this embodiment of this application, the wake-up signal represents a type of signal, that is, a signal transmitted on a wake-up link, and is not limited to a wake-up signal for a terminal device.

A possible implementation in which the terminal device is woken up is paging, for example, paging by a core network or paging by an access network. In other words, the wake-up signal may indicate paging information of the at least one terminal device. For example, the wake-up signal may indicate an identifier of the at least one terminal device. For example, if paging is performed by the core network, the identifier of the terminal device may be a 5G-S-TMSI. For another example, if paging is performed by the access network, the identifier of the terminal device may be an I-RNTI. Alternatively, the identifier of the terminal device may be in another case. For example, to reduce overheads of the wake-up signal, an identifier that is of a terminal device and whose length is shorter than that of the 5G-S-TMSI or the I-RNTI may be indicated by using the wake-up signal. In a possible case, the identifier of the terminal device with a shorter length may be configured by a network device for the terminal device.

The first time window is a time window that is configured by the network device for the terminal device and that is for monitoring the wake-up signal, that is, the terminal device monitors the wake-up signal in the first time window configured by the network device. For example, the first time window includes N time units, and the terminal device may monitor the wake-up signal in the N time units. N is an integer greater than 1 or equal to 1. N may be configured by the network device, or may be predefined, for example, predefined in a standard. This is not limited. For example, the first time window may be periodic.

A time unit may be a symbol, a mini-slot (mini-slot), a slot (slot), a subframe (subframe), an occasion (occasion), a monitoring occasion (monitoring occasion), or a transmission occasion (transmission occasion). This is not limited. One time unit may include a period of consecutive time, or may include several periods of inconsecutive time. FIG. 5 is a diagram of a time unit. As shown in (1) in FIG. 5, one time unit may include a consecutive time period. As shown in (2) in FIG. 5, different time units are interleaved and mapped, and one time unit may include a plurality of inconsecutive time periods. For ease of description, the following mainly uses an example in which one time unit includes a consecutive time period for description. It may be understood that the following solution is also applicable to a scenario in which one time unit includes a plurality of inconsecutive time periods.

In some cases, one wake-up signal may be transmitted in one time unit. In other cases, at least two wake-up signals may be transmitted in one time unit. For example, different wake-up signals may occupy different frequency domain positions in a same time unit.

It may be understood that the time window is mentioned for a plurality of times in this embodiment of this application, and the time window may alternatively be replaced with a time period, a time interval, or a similar concept. A name of the time window does not limit the protection scope of this embodiment of this application.

420. The terminal device determines, based on a result of monitoring the wake-up signal in the first time window, whether to monitor the wake-up signal in a first time period after the first time window.

In a possible case, the terminal device monitors the wake-up signal in the first time period after the first time window based on the result of monitoring the wake-up signal in the first time window.

In another possible case, the terminal device skips monitoring the wake-up signal in the first time period after the first time window based on the result of monitoring the wake-up signal in the first time window. For example, when the terminal device skips monitoring the wake-up signal in the first time period, the network device may not need to configure the first time period. In other words, the first time period may be configured when the terminal device needs to monitor the wake-up signal. For another example, when the terminal device skips monitoring the wake-up signal in the first time period, the terminal device may not start the first time period. For example, when the first time period is controlled by a timer, and the terminal device determines not to monitor the wake-up signal in the first time period, the terminal device may not start the timer. When the terminal device determines to monitor the wake-up signal in the first time period, the terminal device may start the timer. Details are not described below.

According to this embodiment of this application, the terminal device may determine, based on the result of monitoring the wake-up signal in the first time window, whether to continue monitoring the wake-up signal in a period of time after the first time window. In this way, duration of the first time window can be configured to be short to save energy. In addition, if the terminal device determines, based on the result of monitoring the wake-up signal in the first time window, not to monitor the wake-up signal in the first time period after the first time window, the terminal device may not need to continue monitoring the wake-up signal in the first time period after the first time window, to reduce power consumption of the terminal device.

Further, optionally, if a length of the first time window is short, a part of terminal devices may fail to be paged in the first time window. For the part of terminal devices, the network device may send a corresponding wake-up signal in the period of time after the first time window. Correspondingly, the terminal device may determine, based on the result of monitoring the wake-up signal in the first time window, whether to continue monitoring the wake-up signal in the period of time after the first time window. In this way, even if the part of terminal devices cannot be woken up in the first time window, the part of terminal devices may be woken up in the period of time (that is, the first time period) after the first time window. In comparison with that the part of terminal devices need to be woken up in a next time window or another time window (for example, an interval between time windows is long, for another example, in the next time window or another time window, another terminal device may need to be woken up first, and then the part of terminal devices are woken up), the solution of this embodiment of this application can further reduce a delay caused by waking up the terminal device.

Correspondingly, the network device may alternatively determine, based on a status of sending the wake-up signal in the first time window, whether to send the wake-up signal in the first time period after the first time window. It may be understood that, that the network device determines to send the wake-up signal in the first time period after the first time window does not mean that the network device definitely sends the wake-up signal in the first time period. Determining to send the wake-up signal in the first time period after the first time window means determining that the wake-up signal may be sent in the first time period after the first time window, or means determining that the wake-up signal is allowed to be sent in the first time period after the first time window, or means determining that the wake-up signal can be sent in the first time period after the first time window. During actual communication, when the network device determines that the wake-up signal may be sent in the first time period, whether the network device sends the wake-up signal mainly depends on whether there is a terminal device that needs to be woken up.

The first time period may also be understood as extended monitoring time of the first time window. Optionally, a start position of the first time period is the same as an end position of the first time window.

A time length of the first time period and a time length of the first time window may be the same or may be different. This is not limited. For example, the time length of the first time period is the same as the time length of the first time window. For another example, the time length of the first time period is larger than the time length of the first time window. For another example, the time length of the first time period is smaller than the time length of the first time window.

In a possible form, the time length of the first time period and the time length of the first time window meet a specific relationship, for example, T1=$f$(T2). T1 represents the time length of the first time window, T2 represents the time length of the first time period, and $f$() represents a function. For example, the network device may send the foregoing relationship to the terminal device, or the foregoing relationship is predefined. For example, the foregoing relationship is predefined in a standard. This is not limited.

Optionally, the method 400 further includes: The terminal device receives configuration information, where the configuration information includes at least one of the following: information about the first time window or information about the first time period. In a possible implementation, the network device sends the configuration information on a main link, and correspondingly, the terminal device receives the configuration information on the main link by using a main receiver. For example, the configuration information may be carried in a system information block (system information block, SIB).

For example, the terminal device receives the configuration information, where the configuration information includes the information about the first time window.

In this example, the terminal device may learn of the information about the first time window based on the configuration information. Further, optionally, the terminal device may determine the information about the first time period based on the relationship between the first time window and the first time period. For example, if the start position of the first time period is the same as the end position of the first time window, and the time length of the first time period and the time length of the first time window meet T1=f(T2), the terminal device may determine the start position of the first time period based on the end position of the first time window, in addition, determines the time length of the first time period based on T1=f(T2), and may further determine the first time period.

For another example, the terminal device receives the configuration information, where the configuration information includes the information about the first time period.

In this example, the terminal device may learn of the information about the first time period based on the configuration information. Further, optionally, the terminal device may determine the information about the first time window based on the relationship between the first time window and the first time period. For example, if the start position of the first time period is the same as the end position of the first time window, and the time length of the first time period and the time length of the first time window meet T1=f(T2), the terminal device may determine the end position of the first time window based on the start position of the first time period, in addition, determines the time length of the first time window based on T1=f(T2), and may further determine the first time window.

Optionally, that the terminal device determines, based on a result of monitoring the wake-up signal in the first time window, whether to monitor the wake-up signal in a first time period after the first time window in step 420 is implemented in any one of the following manners.

Manner 1: If the terminal device detects the wake-up signal in each time unit in the first time window, the terminal device monitors the wake-up signal in the first time period; or if the terminal device detects no wake-up signal in at least one time unit in the first time window, the terminal device skips monitoring the wake-up signal in the first time period.

Alternatively, if a quantity of wake-up signals detected by the terminal device in the first time window is N, the terminal device monitors the wake-up signal in the first time period; or if a quantity of wake-up signals detected by the terminal device in the first time window is less than N, the terminal device skips monitoring the wake-up signal in the first time period.

For example, if the terminal device detects the wake-up signal in each time unit in the first time window, a large amount of paging information may need to be sent. Therefore, the terminal device may continue monitoring the wake-up signal in the first time period, so that the network device can quickly send, in the first time period, the wake-up signal that fails to be sent in the first time window, to reduce a delay. If the terminal device detects no wake-up signal in at least one time unit in the first time window, it is very likely that paging information that needs to be sent has been completely sent in the first time window. Therefore, the terminal device may not need to continue monitoring the wake-up signal in the first time period, so that monitoring time of the terminal device is shortened and power consumption of the terminal device is reduced. Based on Manner 1, the duration of the first time window can be configured to be short to save energy. In addition, because the length of the first time window is short, a part of terminal devices may fail to be paged in the first time window. For the part of terminal devices, the network device may send a corresponding wake-up signal in the period of time after the first time window. Correspondingly, the terminal device may determine, based on Manner 1, whether to continue monitoring the wake-up signal in the first time period, to reduce the delay.

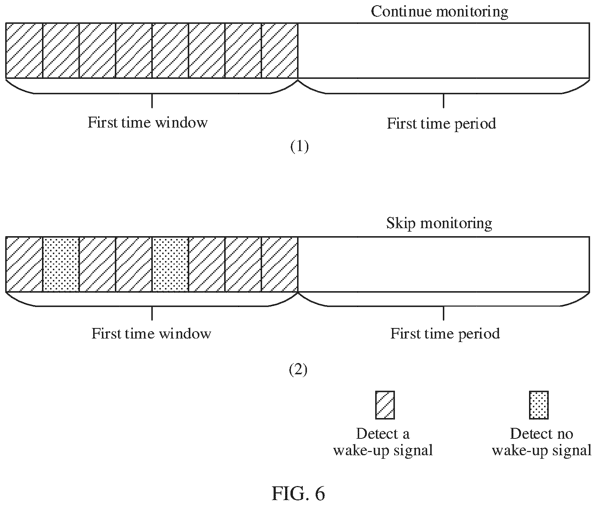

In an example, FIG. 6 is a diagram applicable to Manner 1.

As shown in (1) in FIG. 6, if the terminal device detects the wake-up signal in each time unit in the first time window, the terminal device continues monitoring the wake-up signal in the first time period. As shown in (2) in FIG. 6, if the terminal device detects no wake-up signal in at least one time unit in the first time window, that is, the wake-up signal is sent in a part of time units in the first time window, the terminal device skips monitoring the wake-up signal in the first time period.

In Manner 1, descriptions are provided mainly from a perspective of the terminal device. It may be understood that descriptions for a network device side are similar. For example, if the network device sends the wake-up signal in each time unit in the first time window, the network device may send the wake-up signal in the first time period; or if the network device does not send the wake-up signal in at least one time unit in the first time window, the network device cannot send the wake-up signal in the first time period.

Manner 2: If the terminal device detects no wake-up signal in last N1 time units in the first time window, the terminal device skips monitoring the wake-up signal in the first time period; or if the terminal device detects the wake-up signal in last N1 time units in the first time window, the terminal device monitors the wake-up signal in the first time period. N1 is an integer greater than 1 or equal to 1, and N1 is less than N.

Alternatively, if a quantity of wake-up signals detected by the terminal device in last N1 time units in the first time window is N1, the terminal device monitors the wake-up signal in the first time period; or if a quantity of wake-up signals detected by the terminal device in last N1 time units in the first time window is less than N1, the terminal device skips monitoring the wake-up signal in the first time period.

That the terminal device detects no wake-up signal in the last N1 time units in the first time window indicates that the terminal device detects no wake-up signal in any time unit in the last N1 time units in the first time window, in other words, the quantity of wake-up signals detected by the terminal device in the last N1 time units in the first time window is less than N1. Details are not described below. N1 may be configured by the network device, or may be predefined, for example, predefined in a standard. This is not limited.

For example, it is considered that paging information of some terminal devices arrives in the middle or at the tail of the first time window, that is, arrives at the last N1 time units, and the paging information cannot be completely sent before the end position of the first time window. Therefore, if the terminal device detects the wake-up signal in the last N1 time units in the first time window, the terminal device may continue monitoring the wake-up signal in the first time period, so that the network device can quickly send, in the first time period, the wake-up signal that fails to be sent in the first time window, to reduce a delay. If the terminal device detects no wake-up signal in any time unit in the last N1 time units in the first time window, it is very likely that paging information that needs to be sent has been completely sent in the first time window. Therefore, the terminal device may not need to continue monitoring the wake-up signal in the first time period, so that monitoring time of the terminal device is shortened and power consumption of the terminal device is reduced. Based on Manner 2, the duration of the first time window can be configured to be short to save energy. In addition, because the length of the first time window is short, a part of terminal devices may fail to be paged in the first time window. For the part of terminal devices, the network device may send a corresponding wake-up signal in the period of time after the first time window. Correspondingly, the terminal device may determine, based on Manner 2, whether to continue monitoring the wake-up signal in the first time period, to reduce the delay.

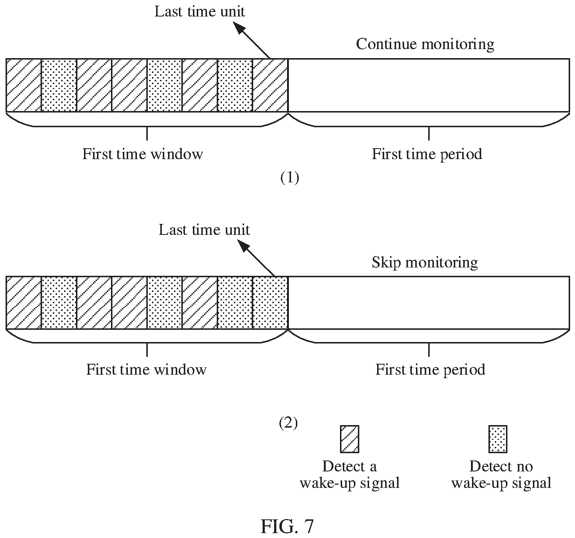

In an example, FIG. 7 is a diagram applicable to Manner 2.

As shown in (1) in FIG. 7, it is assumed that N1=1. If the terminal device detects the wake-up signal in a last time unit in the first time window, the terminal device continues monitoring the wake-up signal in the first time period. As shown in (2) in FIG. 7, if the terminal device detects no wake-up signal in a last time unit in the first time window, the terminal device skips monitoring the wake-up signal in the first time period.

In Manner 2, descriptions are provided mainly from a perspective of the terminal device. It may be understood that descriptions for a network device side are similar. For example, if the network device sends the wake-up signal in the last N1 time units in the first time window, the network device may send the wake-up signal in the first time period; or if the network device does not send the wake-up signal in any time unit in the last N1 time units in the first time window, the network device cannot send the wake-up signal in the first time period.

Manner 3: If the terminal device detects the wake-up signal in N2 time units in the first time window, the terminal device monitors the wake-up signal in the first time period; or if the terminal device detects no wake-up signal in N2 time units in the first time window, the terminal device skips monitoring the wake-up signal in the first time period. N2 is an integer greater than 1 or equal to 1, and N2 is less than N.

Alternatively, if a quantity of wake-up signals detected by the terminal device in the first time window is N2, the terminal device monitors the wake-up signal in the first time period; or if a quantity of wake-up signals detected by the terminal device in the first time window is less than N2, the terminal device skips monitoring the wake-up signal in the first time period.

That the terminal device detects no wake-up signal in the N2 time units in the first time window indicates that the terminal device detects no wake-up signal in any time unit in the N2 time units in the first time window, in other words, the quantity of wake-up signals detected by the terminal device in the first time window is less than N2. Details are not described below. N2 may be configured by the network device, or may be predefined, for example, predefined in a standard. This is not limited.

For example, if the terminal device detects the wake-up signal in all the N2 time units in the first time window, a large amount of paging information may need to be sent. Therefore, the terminal device may continue monitoring the wake-up signal in the first time period, so that the network device can quickly send, in the first time window, the wake-up signal that fails to be sent in the first time window, to reduce a delay. If the terminal device detects no wake-up signal in any time unit in the N2 time units in the first time window, it is very likely that paging information that needs to be sent has been completely sent in the first time window, or there is little paging information in the first time window. Therefore, the terminal device may not need to continue monitoring the wake-up signal in the first time period, so that monitoring time of the terminal device is shortened and power consumption of the terminal device is reduced. Based on Manner 3, the duration of the first time window can be configured to be short to save energy. In addition, because the length of the first time window is short, a part of terminal devices may fail to be paged in the first time window. For the part of terminal devices, the network device may send a corresponding wake-up signal in the period of time after the first time window. Correspondingly, the terminal device may therefore determine, based on Manner 3, whether to continue monitoring the wake-up signal in the first time period, to reduce the delay.

It may be understood that Manner 3 is an example for description, and this is not limited in this embodiment of this application. For example, if a quantity of wake-up signals detected by the terminal device in the first time window is greater than or equal to a threshold, the terminal device monitors the wake-up signal in the first time period; or if a quantity of wake-up signals detected by the terminal device in the first time window is less than a threshold, the terminal device skips monitoring the wake-up signal in the first time period. The threshold may be predefined, for example, predefined in a standard, or may be configured by the network device. This is not limited.

In Manner 3, descriptions are provided mainly from a perspective of the terminal device. It may be understood that descriptions for a network device side are similar. For example, if the network device sends the wake-up signal in the N2 time units in the first time window, the network device may send the wake-up signal in the first time period; or if a quantity of time units in which the network device sends the wake-up signal in the first time window is less than N2, the network device cannot send the wake-up signal in the first time period.

Manner 4: In step 410, if the terminal device detects the wake-up signal in the first time window, and the identifier that is of the terminal device and that is indicated by the wake-up signal includes a first identifier, the terminal device determines, based on an identifier of the terminal device and the first identifier, whether to monitor the wake-up signal in the first time period.

For example, the network device may send the wake-up signal according to a specific rule. The wake-up signal indicates paging information of the at least one terminal device. For example, the network device sends the paging information in ascending order of paging IDs or descending order of paging IDs. In this way, the terminal device may determine, based on a paging ID of the terminal device and a paging ID indicated by the wake-up signal, whether to monitor the wake-up signal in the first time period. Based on Manner 4, the duration of the first time window may be configured to be long, to avoid a case in which a part of terminal devices cannot be paged in the first time window. In addition, the terminal device may determine, based on Manner 4, whether to continue monitoring the wake-up signal in the first time period to save energy.

The following describes several possible cases.

In a first possible case, the network device sends the paging information in ascending order of the paging IDs. To be specific, when the terminal device detects at least two wake-up signals in the first time window, an identifier that is of a terminal device and that is indicated by a wake-up signal detected later is larger than an identifier that is of a terminal device and that is indicated by a wake-up signal detected earlier.

For example, the terminal device detects three wake-up signals in the first time window, for example, denoted as a wake-up signal 1, a wake-up signal 2, and a wake-up signal 3. In this case, an identifier that is of a terminal device and that is indicated by the wake-up signal 3 is larger than an identifier that is of a terminal device and that is indicated by the wake-up signal 2. The identifier that is of the terminal device and that is indicated by the wake-up signal 2 is larger than an identifier that is of a terminal device and that is indicated by the wake-up signal 1.

In this case, that the terminal device determines, based on an identifier of the terminal device and the first identifier, whether to monitor the wake-up signal in the first time period includes: If the identifier of the terminal device is larger than the first identifier, the terminal device monitors the wake-up signal in the first time period; or if the identifier of the terminal device is smaller than the first identifier, the terminal device skips monitoring the wake-up signal in the first time period. The first identifier may represent a largest identifier indicated by the wake-up signal sent by the network device in the first time window. For example, the network device sends at least two wake-up signals in the first time window. The at least two wake-up signals respectively indicate identifiers of at least two terminal devices, and the first identifier is a larger identifier in the identifiers of the at least two terminal devices. It may be understood that, if the identifier of the terminal device is equal to the first identifier, it means that the wake-up signal detected by the terminal device is used to wake up the terminal device. Therefore, the terminal device may not need to determine whether to monitor the wake-up signal in the first time period, that is, the terminal device skips monitoring the wake-up signal in the first time period.

Optionally, if the identifier of the terminal device is smaller than the first identifier, the terminal device stops monitoring the wake-up signal in the first time window. Based on this manner, because the network device sends the paging information in ascending order of the paging IDs in the first time window, if the identifier of the terminal device is smaller than the first identifier, the terminal device may stop monitoring the wake-up signal in the first time window, to further reduce the power consumption of the terminal device. Specifically, the following provides descriptions in detail with reference to a method 1100.

It may be understood that if the first time window is periodic, that the terminal device stops monitoring the wake-up signal in the first time window indicates that the terminal device stops monitoring the wake-up signal in the first time window of a current periodicity. This does not limit stopping, by the terminal device, monitoring the wake-up signal in all first time windows. Details are not described below.

In a second possible case, the network device sends the paging information in descending order of the paging IDs. To be specific, when the terminal device detects at least two wake-up signals in the first time window, an identifier that is of a terminal device and that is indicated by a wake-up signal detected later is smaller than an identifier that is of a terminal device and that is indicated by a wake-up signal detected earlier.

For example, the terminal device detects three wake-up signals in the first time window, for example, denoted as a wake-up signal 1, a wake-up signal 2, and a wake-up signal 3. In this case, an identifier that is of a terminal device and that is indicated by the wake-up signal 3 is smaller than an identifier that is of a terminal device and that is indicated by the wake-up signal 2. The identifier that is of the terminal device and that is indicated by the wake-up signal 2 is smaller than an identifier that is of a terminal device and that is indicated by the wake-up signal 1.

In this case, that the terminal device determines, based on an identifier of the terminal device and the first identifier, whether to monitor the wake-up signal in the first time period includes: If the identifier of the terminal device is smaller than the first identifier, the terminal device monitors the wake-up signal in the first time period; or if the identifier of the terminal device is larger than the first identifier, the terminal device skips monitoring the wake-up signal in the first time period. The first identifier may represent a smallest identifier indicated by the wake-up signal sent by the network device in the first time window. For example, the network device sends at least two wake-up signals in the first time window. The at least two wake-up signals respectively indicate identifiers of at least two terminal devices, and the first identifier is a smaller identifier in the identifiers of the at least two terminal devices. It may be understood that, if the identifier of the terminal device is equal to the first identifier, it means that the wake-up signal detected by the terminal device is used to wake up the terminal device. Therefore, the terminal device may not need to determine whether to monitor the wake-up signal in the first time period, that is, the terminal device skips monitoring the wake-up signal in the first time period.

Optionally, if the identifier of the terminal device is larger than the first identifier, the terminal device stops monitoring the wake-up signal in the first time window. Based on this manner, because the network device sends the paging information in descending order of the paging IDs in the first time window, if the identifier of the terminal device is larger than the first identifier, the terminal device may stop monitoring the wake-up signal in the first time window, to further reduce the power consumption of the terminal device. Specifically, the following provides descriptions in detail with reference to a method 1100.

The foregoing mainly uses an example in which the network device sends the paging information in ascending order or descending order of the paging IDs for description. It may be understood that this embodiment of this application is not limited thereto. Any solution in which the network device sends the wake-up signal according to a specific rule, and then the terminal device may determine, based on the identifier of the terminal device and an identifier indicated by wake-up information, whether the terminal device needs to monitor the wake-up signal is applicable to this embodiment of this application.

In addition, when the network device sends the paging information in ascending order or descending order of the paging IDs, the following several cases may be included.

In one case, the network device sends the paging information in ascending order in the first time window, and sends the paging information in descending order in the first time period. To be specific, when the terminal device detects the at least two wake-up signals in the first time window, the identifier that is of the terminal device and that is indicated by the wake-up signal detected later is larger than the identifier that is of the terminal device and that is indicated by the wake-up signal detected earlier; and when the terminal device detects at least two wake-up signals in the first time period, an identifier that is of a terminal device and that is indicated by a wake-up signal detected later is smaller than an identifier that is of a terminal device and that is indicated by a wake-up signal detected earlier.

In another case, the network device sends the paging information in descending order in the first time window, and sends the paging information in ascending order in the first time period. To be specific, when the terminal device detects the at least two wake-up signals in the first time window, the identifier that is of the terminal device and that is indicated by the wake-up signal detected later is smaller than the identifier that is of the terminal device and that is indicated by the wake-up signal detected earlier; and when the terminal device detects at least two wake-up signals in the first time period, an identifier that is of a terminal device and that is indicated by a wake-up signal detected later is larger than an identifier that is of a terminal device and that is indicated by a wake-up signal detected earlier.

In another case, the network device sends the paging information in ascending order in the first time window, and sends the paging information in ascending order in the first time period. To be specific, when the terminal device detects the at least two wake-up signals in the first time window, the identifier that is of the terminal device and that is indicated by the wake-up signal detected later is larger than the identifier that is of the terminal device and that is indicated by the wake-up signal detected earlier; and when the terminal device detects at least two wake-up signals in the first time period, an identifier that is of a terminal device and that is indicated by a wake-up signal detected later is larger than an identifier that is of a terminal device and that is indicated by a wake-up signal detected earlier.

In another case, the network device sends the paging information in descending order in the first time window, and sends the paging information in descending order in the first time period. To be specific, when the terminal device detects the at least two wake-up signals in the first time window, the identifier that is of the terminal device and that is indicated by the wake-up signal detected later is smaller than the identifier that is of the terminal device and that is indicated by the wake-up signal detected earlier; and when the terminal device detects at least two wake-up signals in the first time period, an identifier that is of a terminal device and that is indicated by a wake-up signal detected later is smaller than an identifier that is of a terminal device and that is indicated by a wake-up signal detected earlier.

In Manner 4, descriptions are provided mainly from a perspective of the terminal device. It may be understood that descriptions for a network device side are similar.

For example, the first possible case is used as an example. The first identifier indicates the largest identifier indicated by the wake-up signal sent by the network device in the first time window. For an identifier (for example, denoted as an identifier of a terminal device 1) of a terminal device, the network device compares the identifier of the terminal device 1 with the first identifier. If the identifier of the terminal device 1 is larger than the first identifier, the network device determines that a wake-up signal corresponding to the terminal device 1 can be sent in the first time period; or if the identifier of the terminal device 1 is smaller than the first identifier, the network device determines that a wake-up signal corresponding to the terminal device 1 cannot be sent in the first time period. The wake-up signal corresponding to the terminal device 1, that is, the wake-up signal, indicates the identifier of the terminal device 1 that needs to be woken up.

For another example, the second possible case is used as an example. The first identifier indicates the smallest identifier indicated by the wake-up signal sent by the network device in the first time window. For an identifier (for example, denoted as an identifier of a terminal device 1) of a terminal device, the network device compares the identifier of the terminal device 1 with the first identifier. If the identifier of the terminal device 1 is smaller than the first identifier, the network device determines that a wake-up signal corresponding to the terminal device 1 can be sent in the first time period; or if the identifier of the terminal device 1 is larger than the first identifier, the network device determines that a wake-up signal corresponding to the terminal device 1 cannot be sent in the first time period. The wake-up signal corresponding to the terminal device 1, that is, the wake-up signal, indicates the identifier of the terminal device 1 that needs to be woken up.

Manner 5: In step 410, if the terminal device detects first information in the first time window, and the first information indicates to stop monitoring the wake-up signal, the terminal device skips monitoring the wake-up signal in the first time period based on the first information.

Correspondingly, the network device may also determine, based on the first information, that the wake-up signal cannot be sent in the first time period.

Based on Manner 5, when the network device determines that no paging information needs to be sent, for example, no terminal device needs to be paged, or paging in a cache has been completely sent, the network device may send the first information, to indicate the terminal device to stop monitoring the wake-up signal, to reduce power consumption of the terminal device.

Optionally, the terminal device stops, based on the first information, monitoring the wake-up signal in the first time window. Based on this manner, because the network device has indicated to stop monitoring the wake-up signal, the terminal device may stop monitoring the wake-up signal in the first time window, to further reduce power consumption of the terminal device. Specifically, the following provides descriptions in detail with reference to a method 1100.

Optionally, Manner 5 may be used in combination with any one of Manner 1 to Manner 4 and the following Manner 6. Specifically, if the terminal device receives the first information, the terminal device may directly stop, based on the first information, monitoring the wake-up signal, and does not need to perform determining in Manner 1 to Manner 4 and Manner 6, or may ignore determining in Manner 1 to Manner 4 and Manner 6.

A combination of Manner 5 and Manner 4 is used as an example. For example, the network device sends the paging information in ascending order of the paging IDs. If a paging ID of the terminal device is large, that "paging IDs of all terminal devices paged by the network device are smaller than the paging ID of the terminal device" may occur. In this case, the terminal device cannot stop monitoring in advance. Therefore, in the first time window, if the network device determines that no paging information needs to be sent, for example, no terminal device needs to be paged, or paging in the cache has been completely sent, the network device may send the first information, to indicate the terminal device to stop monitoring the wake-up signal. In other words, the terminal device may directly stop monitoring the wake-up signal based on the first information without determining the identifier of the terminal device and the first identifier.

A form of the first information is not limited.

In a possible form, the first information is an ID, for example, denoted as an end ID. A value of the end ID may be predefined, for example, predefined in a standard, or may be configured by the network device. This is not limited. In an example, the value of the end ID is all 1s, all 0s, or another value. For example, when Manner 5 is used in combination with Manner 4, if the network device sends the paging information in ascending order of the paging IDs, the value of the end ID may be set to all 1s. For another example, when Manner 5 is used in combination with Manner 4, if the network device sends the paging information in descending order of the paging IDs, the value of the end ID may be set to all 0s.

For another example, the first information may be in a form of a bit field. A format of the first information may be the same as or different from a format of the paging information. A format of the wake-up signal that carries the first information may be the same as or different from a format of the wake-up signal that carries the paging information. This is not limited.

Manner 6: If the terminal device detects the wake-up signal in at least one time unit in last N3 time units in the first time window, the terminal device monitors the wake-up signal in the first time period; or if the terminal device detects no wake-up signal in all last N3 time units in the first time window, the terminal device skips monitoring the wake-up signal in the first time period. N3 is an integer greater than 1 or equal to 1, and N3 is less than N.

Alternatively, if a quantity of wake-up signals detected by the terminal device in last N3 time units in the first time window is greater than 0, the terminal device monitors the wake-up signal in the first time period; or if a quantity of wake-up signals detected by the terminal device in last N3 time units in the first time window is 0, the terminal device skips monitoring the wake-up signal in the first time period.

N3 may be configured by the network device, or may be predefined, for example, predefined in a standard. This is not limited.

For example, it is considered that paging information of some terminal devices arrives in the middle or at the tail of the first time window, that is, arrives at the last N3 time units or a time unit in the last N3 time units, and the paging information cannot be completely sent before the end position of the first time window. Therefore, if the terminal device detects the wake-up signal in at least one time unit in the last N3 time units in the first time window, the terminal device may continue monitoring the wake-up signal in the first time period, so that the network device can quickly send, in the first time period, a wake-up signal that fails to be sent in the first time window, to reduce a delay. If the terminal device detects no wake-up signal in all the last N3 time units in the first time window, it is very likely that the paging information that needs to be sent has been completely sent in the first time window. Therefore, the terminal device may not need to continue monitoring the wake-up signal in the first time period, so that monitoring time of the terminal device is shortened and power consumption of the terminal device is reduced. Based on Manner 6, the duration of the first time window can be configured to be short to save energy. In addition, because the length of the first time window is short, a part of terminal devices may fail to be paged in the first time window. For the part of terminal devices, the network device may send a corresponding wake-up signal in the period of time after the first time window. Correspondingly, the terminal device may determine, based on Manner 6, whether to continue monitoring the wake-up signal in the first time period, to reduce the delay.

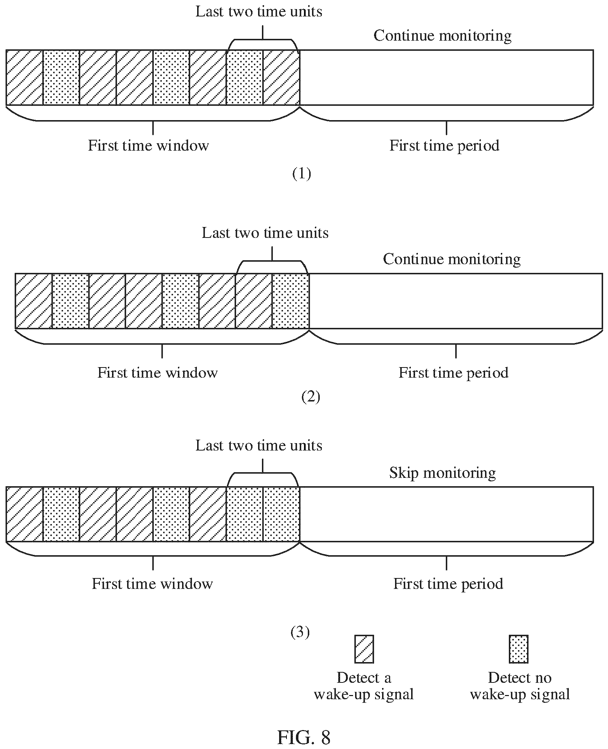

In an example, FIG. 8 is a diagram applicable to Manner 6.

As shown in (1) or (2) in FIG. 8, it is assumed that N3=2. If the terminal device detects the wake-up signal in at least one time unit in last two time units in the first time window, the terminal device continues monitoring the wake-up signal in the first time period. As shown in (3) in FIG. 8, if the terminal device detects no wake-up signal in last two time units in the first time window, the terminal device skips monitoring the wake-up signal in the first time period.

In Manner 6, descriptions are provided mainly from a perspective of the terminal device. It may be understood that descriptions for a network device side are similar. For example, if the network device sends the wake-up signal in at least one time unit in the last N3 time units in the first time window, the network device may send the wake-up signal in the first time period; or if the network device does not send the wake-up signal in all the last N3 time units in the first time window, the network device cannot send the wake-up signal in the first time period.

With reference to Manner 1 to Manner 6, the foregoing describes a solution in which the terminal device determines, based on the result of monitoring the wake-up signal in the first time window, whether to monitor the wake-up signal in the first time period after the first time window. It may be understood that Manner 1 to Manner 6 are examples for description, any variation of Manner 1 to Manner 6 is applicable to this embodiment of this application.

The foregoing repeatedly mentions that the terminal device monitors the wake-up signal. A manner of determining whether the terminal device detects the wake-up signal is not limited. In an example, the following lists two possible implementations.

In a possible implementation, the terminal device performs energy detection in a time unit. If detected energy is greater than a preset threshold, the terminal device may determine that the network device sends the wake-up signal, that is, the terminal device detects the wake-up signal; or if detected energy is less than a preset threshold, the terminal device may determine that the network device does not send the wake-up signal, that is, the terminal device detects no wake-up signal. A value of the preset threshold is not limited, for example, may be predefined, for example, predefined in a standard, or may be configured by the network device, or may be determined by the terminal device based on a channel measurement result.

In another possible implementation, the terminal device attempts to decode a signal monitored in a time unit, for example, performs a cyclic redundancy check (cyclic redundancy check, CRC) check. If the CRC check succeeds, the terminal device may determine that the network device sends the wake-up signal, that is, the terminal device detects the wake-up signal; or if the CRC check fails, the terminal device may determine that the network device does not send the wake-up signal, that is, the terminal device detects no wake-up signal.

As described above, the network device may configure, for the terminal device, a time window for monitoring the wake-up signal. The network device may configure different time windows for different terminal devices or different groups of terminal devices. The following describes possible designs of the different time windows.

In a first possible case, time window boundaries of different terminal devices overlap.

The first time window and a second time window are used as an example. It is assumed that the first time window and the second time window are adjacent time windows. Based on this case, the end position of the first time window overlaps a start position of the second time window. The second time window may represent a time window corresponding to monitoring the wake-up signal by another terminal device or another terminal device group.

It may be understood that, in this embodiment of this application, it is mentioned for a plurality of times that the first time window and the second time window are adjacent time windows, and it indicates that the second time window is a time window next to the first time window. In other words, from a perspective of a network side, the second time window is a time window next to the first time window, and it is not limited there being no time interval between the first time window and the second time window. Details are not described below.

In the first possible case, that the end position of the first time window overlaps a start position of the second time window may also be understood as that a time interval between the end position of the first time window and the start position of the second time window is 0. In this case, the first time period of the first time window and the second time window may overlap, for example, partially overlap or completely overlap.

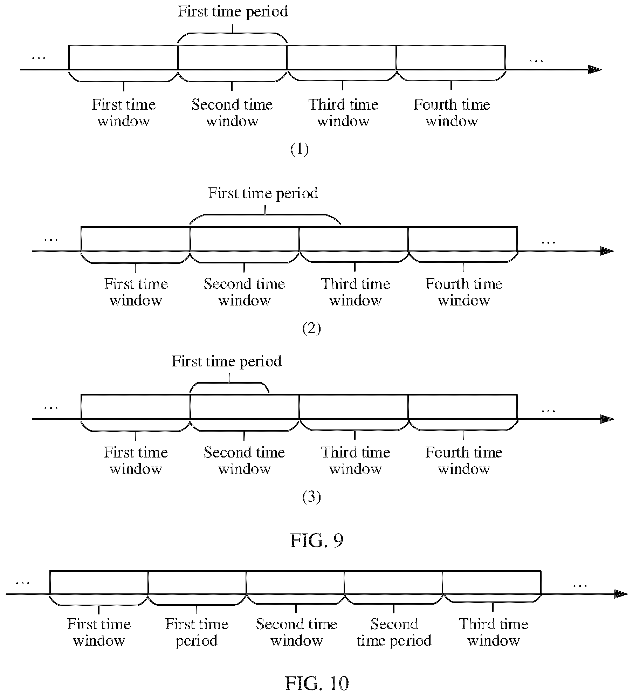

In an example, FIG. 9 is a diagram in which time window boundaries of different terminal devices overlap.

As shown in FIG. 9, time windows configured by the network device include the first time window, the second time window, a third time window, and a fourth time window, and time lengths of the time windows are the same. It can be learned from FIG. 9 that boundaries of adjacent time windows overlap, that is, a time interval between adjacent time windows is 0.

As shown in (1) in FIG. 9, if the time length of the first time period is the same as the time length of the first time window, the first time period completely overlaps the second time window. As shown in (2) in FIG. 9, if the time length of the first time period is larger than the time length of the first time window, the first time period completely overlaps the second time window, and partially overlaps the third time window. As shown in (3) in FIG. 9, if the time length of the first time period is smaller than the time length of the first time window, the first time period partially overlaps the second time window.

It may be understood that FIG. 9 is an example for description, and this is not limited. For example, the first time period of the first time window completely overlaps the second time window and the third time window.

In a second possible case, time window boundaries of different terminal devices do not overlap, that is, the time window boundaries of the different terminal devices have a specific interval.

The first time window and the second time window are used as an example. It is assumed that the first time window and the second time window are adjacent time windows. Based on this case, the end position of the first time window precedes a start position of the second time window, in other words, the end position of the first time window does not overlap the start position of the second time window. The second time window may represent a time window corresponding to monitoring the wake-up signal by another terminal device or another terminal device group.

In the second possible case, that the end position of the first time window does not overlap a start position of the second time window may also be understood as that a time interval between the end position of the first time window and the start position of the second time window is greater than 0. In this case, the time interval between the end position of the first time window and the start position of the second time window may be, for example, the first time period, or may be greater than the first time period, or may be less than the first time period.

In an example, FIG. 10 is a diagram in which time window boundaries of different terminal devices do not overlap.

As shown in FIG. 10, time windows configured by the network device include the first time window, the second time window, and a third time window, and time lengths of the time windows are the same. It can be learned from FIG. 10 that boundaries of adjacent time windows do not overlap, that is, a time interval between adjacent time windows is greater than 0. As shown in FIG. 10, the first time window and the second time window are separated by the first time period of the first time window, and the second time window and the third time window are separated by a second time period of the second time window. The first time period may be understood as extended monitoring time corresponding to the first time window, and the second time period may be understood as extended monitoring time corresponding to the second time window.

It may be understood that FIG. 10 is an example for description, and this is not limited. For example, the time interval between the first time window and the second time window may be greater than the first time period, or may be less than the first time period.

It is assumed that a periodicity of the time window configured by the network device is T, a length of the time window is W, and an offset (offset) of a 1st time window in one periodicity is O. The terminal device may determine, based on the foregoing parameters, a position at which the 1st time window appears in one periodicity. For example, it is assumed that an index (index) of a time unit is a time unit_index, and a paging ID of the terminal device is a UE_ID.

Based on the first possible case, a start time unit_index of the first time window of the terminal device may meet Formula 1.

$$\text{(Time unit\_index+O) mod T=W*(UE\_ID mod (T/W))} \qquad \text{Formula 1}$$

mod is a modulo operation.

Based on the second possible case, it is assumed that the length of the first time period is E, and the start time unit_index of the first time window of the terminal device may meet Formula 2.

$$\text{(Time unit\_index+O) mod T=(W+E)*(UE\_ID mod (T/(W+E)))} \qquad \text{Formula 2}$$

It may be understood that the foregoing formulas are merely examples for description, and do not limit the protection scope of this embodiment of this application. In a process in which the foregoing parameters are calculated, calculation may be performed according to the foregoing formulas, or calculation may be performed based on variations of the foregoing formulas, or calculation may be performed in another manner to meet a calculation result of the formulas.

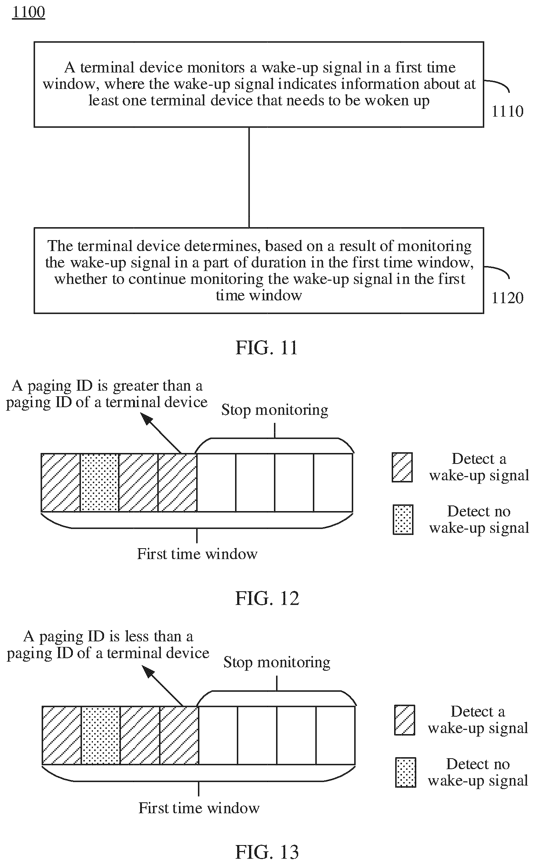

FIG. 11 is a diagram of a signal transmission method 1100 according to another embodiment of this application. The method 1100 may include the following steps.

1110. A terminal device monitors a wake-up signal in a first time window, where the wake-up signal indicates information about at least one terminal device that needs to be woken up.

Step 1110 is similar to step 410, and a difference lies in that the first time window in the method 1100 may be the first time window in the method 400, or the first time window in the method 1100 may be the first time window and the first time period in the method 400, in other words, the first time window and the first time period in the method 400 are used as the first time window in the method 1100.

1120. The terminal device determines, based on a result of monitoring the wake-up signal in a part of duration in the first time window, whether to continue monitoring the wake-up signal in the first time window.

The terminal device may determine, based on a result of monitoring the wake-up signal in the first time window, whether to continue monitoring the wake-up signal in the first time window. For example, the terminal device may determine, based on the result of monitoring the wake-up signal in the part of duration in the first time window, whether to continue monitoring the wake-up signal in the first time window. That the terminal device determines, based on a result of monitoring the wake-up signal in a part of duration in the first time window, whether to continue monitoring the wake-up signal in the first time window indicates that the terminal device determines, based on a result of a wake-up signal that has been detected in the first time window (or a result of a wake-up signal that is being detected), whether to continue monitoring the wake-up signal in the first time window.

In a possible case, the terminal device continues monitoring the wake-up signal in the first time window based on the result of monitoring the wake-up signal in the part of duration of the first time window.

In another possible case, the terminal device stops monitoring the wake-up signal in the first time window based on the result of monitoring the wake-up signal in the part of duration in the first time window. If the first time window is periodic, that the terminal device stops monitoring the wake-up signal in the first time window indicates that the terminal device stops monitoring the wake-up signal in the first time window of a current periodicity. This does not limit stopping, by the terminal device, monitoring the wake-up signal in all first time windows. Details are not described below.

According to this embodiment of this application, the terminal device may determine, based on the result of monitoring the wake-up signal in the part of duration in the first time window, whether to continue monitoring the wake-up signal in the first time window. In this way, duration of the first time window may be configured to be long, to avoid a case in which a part of terminal devices cannot be paged in the first time window. In addition, the terminal device may determine, based on the result of monitoring the wake-up signal in the part of duration in the first time window, whether to continue monitoring the wake-up signal in the first time window, to reduce power consumption of the terminal device.

Correspondingly, a network device may alternatively determine, based on a status of sending the wake-up signal in the first time window, whether to continue sending the wake-up signal in the first time window. It may be understood that determining to continue sending the wake-up signal in the first time window does not limit definitely continuing sending the wake-up signal in the first time window by the network device. Determining to continue sending the wake-up signal in the first time window indicates that it is determined that the wake-up signal may continue to be sent in the first time window, or indicates that it is determined that the wake-up signal is allowed to continue to be sent in the first time window, or indicates that it is determined that the wake-up signal can continue to be sent in the first time window. During actual communication, when the network device determines that the wake-up signal may continue to be sent in the first time window, whether the network device sends the wake-up signal mainly depends on whether there is a terminal device that needs to be woken up.

Optionally, the method 1100 further includes: The terminal device receives configuration information, where the configuration information includes information about the first time window. In a possible implementation, the network device sends the configuration information on a main link, and correspondingly, the terminal device receives the configuration information on the main link. For example, the configuration information may be carried in a SIB.

Optionally, that the terminal device determines, based on a result of monitoring the wake-up signal in a part of duration in the first time window, whether to monitor the wake-up signal in the first time window in step 1120 is implemented in any one of the following manners.

Manner A: In step 1110, if the terminal device detects the wake-up signal in the first time window, and an identifier that is of a terminal device and that is indicated by the wake-up signal includes a first identifier, the terminal device determines, based on an identifier of the terminal device and the first identifier, whether to continue monitoring the wake-up signal in the first time window.

For example, the network device may send the wake-up signal according to a specific rule. The wake-up signal indicates paging information of at least one terminal device. For example, the network device sends the paging information in ascending order of paging IDs or descending order of paging IDs. In this way, the terminal device may determine, based on a paging ID of the terminal device and a paging ID indicated by the wake-up signal, whether to continue monitoring the wake-up signal in the first time window. Based on this manner, the duration of the first time window may be configured to be long, to avoid a case in which a part of terminal devices cannot be paged in the first time window. In addition, the terminal device may determine, based on this manner, whether to continue monitoring the wake-up signal in the first time window to save energy.

The following describes several possible cases.

In a first possible case, the network device sends the paging information in ascending order of the paging IDs. To be specific, when the terminal device detects at least two wake-up signals in the first time window, an identifier that is of a terminal device and that is indicated by a wake-up signal detected later is larger than an identifier that is of a terminal device and that is indicated by a wake-up signal detected earlier. For details, refer to the descriptions in the method 400. Details are not described herein again.

In this case, that the terminal device determines, based on an identifier of the terminal device and the first identifier, whether to continue monitoring the wake-up signal in the first time window includes: If the identifier of the terminal device is larger than the first identifier, the terminal device continues monitoring the wake-up signal in the first time window; or if the identifier of the terminal device is smaller than the first identifier, the terminal device stops continuing monitoring the wake-up signal in the first time window. The first identifier may represent a largest identifier indicated by the wake-up signal sent by the network device in the first time window. For example, the network device sends at least two wake-up signals in the first time window. The at least two wake-up signals respectively indicate identifiers of at least two terminal devices, and the first identifier is a larger identifier in the identifiers of the at least two terminal devices. It may be understood that, if the identifier of the terminal device is equal to the first identifier, it means that the wake-up signal detected by the terminal device is used to wake up the terminal device. Therefore, the terminal device may not need to determine whether to continue monitoring the wake-up signal in the first time window, that is, the terminal device stops continuing monitoring the wake-up signal in the first time window.

In an example, FIG. 12 is a diagram applicable to Manner A.

As shown in FIG. 12, if the terminal device detects a wake-up signal in a time unit in the first time window, and a paging ID indicated by the wake-up signal is larger than the paging ID of the terminal device, the terminal device stops continuing monitoring the wake-up signal in the first time window.

In a second possible case, the network device sends the paging information in descending order of the paging IDs. To be specific, when the terminal device detects at least two wake-up signals in the first time window, an identifier that is of a terminal device and that is indicated by a wake-up signal detected later is smaller than an identifier that is of a terminal device and that is indicated by a wake-up signal detected earlier. For details, refer to the descriptions in the method 400. Details are not described herein again.

In this case, that the terminal device determines, based on an identifier of the terminal device and the first identifier, whether to continue monitoring the wake-up signal in the first time window includes: If the identifier of the terminal device is smaller than the first identifier, the terminal device continues monitoring the wake-up signal in the first time window; or if the identifier of the terminal device is larger than the first identifier, the terminal device stops continuing monitoring the wake-up signal in the first time window. The first identifier may represent a smallest identifier indicated by the wake-up signal sent by the network device in the first time window. For example, the network device sends at least two wake-up signals in the first time window. The at least two wake-up signals respectively indicate identifiers of at least two terminal devices, and the first identifier is a smaller identifier in the identifiers of the at least two terminal devices. It may be understood that, if the identifier of the terminal device is equal to the first identifier, it means that the wake-up signal detected by the terminal device is used to wake up the terminal device. Therefore, the terminal device may not need to determine whether to continue monitoring the wake-up signal in the first time window, that is, the terminal device stops continuing monitoring the wake-up signal in the first time window.

In an example, FIG. 13 is another diagram applicable to Manner A.

As shown in FIG. 13, if the terminal device detects a wake-up signal in a time unit in the first time window, and a paging ID indicated by the wake-up signal is smaller than the paging ID of the terminal device, the terminal device stops continuing monitoring the wake-up signal in the first time window.

The foregoing mainly uses an example in which the network device sends the paging information in ascending order or descending order of the paging IDs for description. It may be understood that this embodiment of this application is not limited thereto. A solution in which the network device sends the wake-up signal according to a specific rule, and then the terminal device may determine, based on the identifier of the terminal device and an identifier indicated by wake-up information, whether the terminal device needs to continue monitoring the wake-up signal in the first time window is applicable to this embodiment of this application.

For example, the network device sends the paging information in ascending order of the paging IDs. A terminal device with a smaller paging ID can determine earlier that the terminal device is not to be paged, to obtain a larger energy saving benefit, while a terminal device with a larger paging ID usually needs to perform monitoring for a longer time, or even perform monitoring in an entire time window. Therefore, the foregoing problem can be resolved by sending the paging information in ascending order of the paging IDs in the first time window of one periodicity and sending the paging information in descending order of the paging IDs in the first time window of a next periodicity. For example, the paging information is sent in ascending order of the paging IDs in the first time window of an odd-numbered periodicity, and the paging information is sent in descending order of the paging IDs in the first time window of an evennumbered periodicity. The following provides an example.

It is assumed that the first time window is periodic, periodicities of the first time window include a first periodicity and a second periodicity, and the first periodicity is adjacent to the second periodicity. When the network device sends the paging information in ascending order or descending order of the paging IDs, the following several cases may be included.

In one case, the network device sends the paging information in ascending order of the paging IDs in the first time window of the first periodicity, and sends the paging information in descending order in the first time window of the second periodicity. To be specific, when the terminal device detects at least two wake-up signals in the first time window of the first periodicity, an identifier that is of a terminal device and that is indicated by a wake-up signal detected later is larger than an identifier that is of a terminal device and that is indicated by a wake-up signal detected earlier; and when the terminal device detects at least two wake-up signals in the first time window of the second periodicity, an identifier that is of a terminal device and that is indicated by a wake-up signal detected later is smaller than an identifier that is of a terminal device and that is indicated by a wake-up signal detected earlier.

In another case, the network device sends the paging information in descending order of the paging IDs in the first time window of the first periodicity, and sends the paging information in ascending order in the first time window of the second periodicity. To be specific, when the terminal device detects at least two wake-up signals in the first time window of the first periodicity, an identifier that is of a terminal device and that is indicated by a wake-up signal detected later is smaller than an identifier that is of a terminal device and that is indicated by a wake-up signal detected earlier; and when the terminal device detects at least two wake-up signals in the first time window of the second periodicity, an identifier that is of a terminal device and that is indicated by a wake-up signal detected later is larger than an identifier that is of a terminal device and that is indicated by a wake-up signal detected earlier.

It may be understood that the foregoing two cases are examples for description, and this embodiment of this application is not limited thereto. For example, the network device may alternatively perform sending in ascending order in the first time window of each periodicity, or perform sending in descending order in the first time window of each periodicity.

In addition, in the foregoing two cases, further optionally, the method 1100 further includes: The network device sends second information to the terminal device, where the second information indicates a periodicity of the first time window, for example, indicates a periodicity index, so that the terminal device can learn whether the network device sends the paging information in ascending order of the paging IDs or in descending order of the paging IDs.

In Manner A, descriptions are provided mainly from a perspective of the terminal device. It may be understood that descriptions for a network device side are similar.

For example, the first possible case is used as an example. The first identifier indicates the largest identifier indicated by the wake-up signal sent by the network device in the first time window. For an identifier (for example, denoted as an identifier of a terminal device 1) of a terminal device, the network device compares the identifier of the terminal device 1 with the first identifier. If the identifier of the terminal device 1 is larger than the first identifier, the network device determines that a wake-up signal corresponding to the terminal device 1 may continue to be sent in the first time window; or if the identifier of the terminal device 1 is smaller than the first identifier, the network device determines that a wake-up signal corresponding to the terminal device 1 cannot be sent in the first time window. The wake-up signal corresponding to the terminal device 1, that is, the wake-up signal, indicates the identifier of the terminal device 1 that needs to be woken up.

For another example, the second possible case is used as an example. The first identifier indicates the smallest identifier indicated by the wake-up signal sent by the network device in the first time window. For an identifier (for example, denoted as an identifier of a terminal device 1) of a terminal device, the network device compares the identifier of the terminal device 1 with the first identifier. If the identifier of the terminal device 1 is smaller than the first identifier, the network device determines that a wake-up signal corresponding to the terminal device 1 may continue to be sent in the first time window; or if the identifier of the terminal device 1 is larger than the first identifier, the network device determines that a wake-up signal corresponding to the terminal device 1 cannot be sent in the first time window. The wake-up signal corresponding to the terminal device 1, that is, the wake-up signal, indicates the identifier of the terminal device 1 that needs to be woken up.

Manner B: In step 1110, if the terminal device detects first information in the first time window, and the first information indicates to stop monitoring the wake-up signal, the terminal device stops, based on the first information, monitoring the wake-up signal in the first time window.

Correspondingly, the network device may also determine, based on the first information, to stop sending the wake-up signal in the first time window.

Based on Manner B, when the network device determines that no paging information needs to be sent, for example, no terminal device needs to be paged, or paging in a cache has been completely sent, the network device may send the first information, to indicate the terminal device to stop monitoring the wake-up signal, to reduce power consumption of the terminal device.

Optionally, Manner B may be used in combination with Manner A. For example, the network device sends the paging information in ascending order of the paging IDs. If a paging ID of the terminal device is large, that "paging IDs of all terminal devices paged by the network device are smaller than the paging ID of the terminal device" may occur. In this case, the terminal device cannot stop monitoring in advance. Therefore, in the first time window, if the network device determines that no paging information needs to be sent, for example, no terminal device needs to be paged, or paging in the cache has been completely sent, the network device may send the first information, to indicate the terminal device to stop monitoring the wake-up signal.

A form of the first information is not limited. For details, refer to the descriptions in the method 400. Details are not described herein again.

In addition, for related solutions of how to determine whether the terminal device detects the wake-up signal and how the network device configures different time windows for different terminal devices or different terminal device groups, refer to descriptions in the method 400. Details are not described herein again.

It may be understood that the examples in FIG. 4 to FIG. 13 in embodiments of this application are merely intended to help a person skilled in the art understand embodiments of this application, but are not intended to limit embodiments of this application to specific scenarios shown in the examples. A person skilled in the art can apparently make various equivalent modifications or changes according to the examples shown in FIG. 4 to FIG. 13, and such modifications or changes also fall within the scope of embodiments of this application.

It may be further understood that in some of the foregoing embodiments, an example in which one time unit includes a consecutive time period is mainly used for description. Embodiments of this application are not limited thereto. For example, the solution in embodiments of this application may be further used in a scenario in which one time unit includes a plurality of inconsecutive time periods.

It may be further understood that in embodiments of this application, "monitoring" may alternatively be replaced with "detecting" or "reading". For example, "monitoring a wake-up signal" may alternatively be replaced with "detecting a wake-up signal" or "reading a wake-up signal".

It may be further understood that, in some of the foregoing embodiments, "transmission" is mentioned. Unless otherwise specified, transmission includes receiving and/or sending. For example, transmitting a signal may include receiving a signal and/or sending a signal.

It may be further understood that, in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be further understood that some optional features in embodiments of this application may not depend on another feature in some scenarios, or may be combined with another feature in some scenarios. This is not limited.

It may be further understood that the solutions in embodiments of this application may be properly combined for use, and explanations or descriptions of terms in embodiments may be mutually referenced or explained in embodiments. This is not limited.

It may be further understood that, in the foregoing method embodiments, a method and an operation implemented by the terminal device may alternatively be implemented by a component (for example, a chip or a circuit) of the terminal device. In addition, a method and an operation implemented by the network device may alternatively be implemented by a component (for example, a chip or a circuit) of the network device. This is not limited.

In correspondence to the methods provided in the foregoing method embodiments, an embodiment of this application further provides a corresponding apparatus. The apparatus includes corresponding modules configured to perform the foregoing method embodiments. The module may be software, hardware, or a combination of software and hardware. It may be understood that the technical features described in the foregoing method embodiments are also applicable to the following apparatus embodiments.

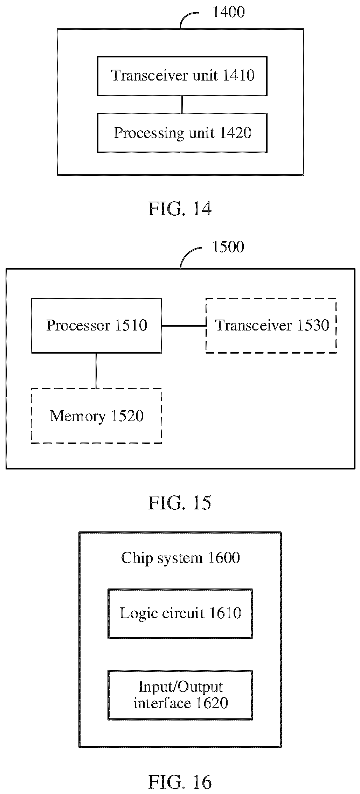

FIG. 14 is a block diagram of a communication apparatus 1400 according to an embodiment of this application. The apparatus 1400 includes a transceiver unit 1410 and a processing unit 1420. The transceiver unit 1410 may be configured to implement a corresponding communication function. The transceiver unit 1410 may also be referred to as a communication interface or a communication unit. The processing unit 1420 may be configured to perform data processing.

Optionally, the apparatus 1400 further includes a storage unit. The storage unit may be configured to store instructions and/or data. The processing unit 1420 may read the instructions and/or the data in the storage unit, to enable the apparatus to implement an action of the terminal device in the foregoing method embodiments.

The apparatus 1400 may be configured to perform an action performed by the terminal device in the foregoing method embodiments. In this case, the apparatus 1400 may be the terminal device or a component of the terminal device. The transceiver unit 1410 is configured to perform receiving and sending-related operations on a terminal device side in the foregoing method embodiments. The processing unit 1420 is configured to perform processing-related operations on the terminal device side in the foregoing method embodiments.

In a possible implementation, the transceiver unit 1410 is configured to monitor a wake-up signal in a first time window, where the wake-up signal indicates information about at least one terminal device that needs to be woken up. The processing unit 1420 is configured to determine, based on a result of monitoring the wake-up signal in the first time window, whether to monitor the wake-up signal in a first time period after the first time window.

Optionally, the first time window includes N time units, and N is an integer greater than 1 or equal to 1. If the terminal device detects the wake-up signal in each time unit in the first time window, the transceiver unit 1410 is further configured to monitor the wake-up signal in the first time period. If the terminal device detects no wake-up signal in at least one time unit in the first time window, the terminal device skips monitoring the wake-up signal in the first time period.

Optionally, the first time window includes N time units, and N is an integer greater than 1 or equal to 1. If the terminal device detects no wake-up signal in last N1 time units in the first time window, the terminal device skips monitoring the wake-up signal in the first time period. If the terminal device detects the wake-up signal in last N1 time units in the first time window, the transceiver unit 1410 is further configured to monitor the wake-up signal in the first time period. N1 is an integer greater than 1 or equal to 1, and N1 is less than N.

Optionally, the first time window includes N time units, and N is an integer greater than 1 or equal to 1. If the terminal device detects no wake-up signal in N2 time units in the first time window, the terminal device skips monitoring the wake-up signal in the first time period. If the terminal device detects the wake-up signal in N2 time units in the first time window, the transceiver unit 1410 is further configured to monitor the wake-up signal in the first time period. N2 is an integer greater than 1 or equal to 1, and N2 is less than N.

Optionally, the information about the at least one terminal device that needs to be woken up is an identifier of the at least one terminal device that needs to be woken up. The transceiver unit 1410 is specifically configured to detect the wake-up signal in the first time window, where an identifier that is indicated by the wake-up signal and that is of the at least one terminal device that needs to be woken up includes a first identifier. The processing unit 1420 is specifically configured to determine, based on an identifier of the terminal device and the first identifier, whether to monitor the wake-up signal in the first time period.

Optionally, when the terminal device detects at least two wake-up signals in the first time window, an identifier that is of a terminal device and that is indicated by a wake-up signal detected later is larger than an identifier that is of a terminal device and that is indicated by a wake-up signal detected earlier.

Optionally, if the identifier of the terminal device is larger than the first identifier, the transceiver unit 1410 is further configured to monitor the wake-up signal in the first time period; or if the identifier of the terminal device is smaller than the first identifier, the terminal device skips monitoring the wake-up signal in the first time period, or the terminal device stops monitoring the wake-up signal in the first time window and skips monitoring the wake-up signal in the first time period.

Optionally, when the terminal device detects at least two wake-up signals in the first time window, an identifier that is of a terminal device and that is indicated by a wake-up signal detected later is smaller than an identifier that is of a terminal device and that is indicated by a wake-up signal detected earlier.

Optionally, if the identifier of the terminal device is smaller than the first identifier, the transceiver unit 1410 is further configured to monitor the wake-up signal in the first time period; or if the identifier of the terminal device is larger than the first identifier, the terminal device skips monitoring the wake-up signal in the first time period, or the terminal device stops monitoring the wake-up signal in the first time window and skips monitoring the wake-up signal in the first time period.

Optionally, when the terminal device detects the at least two wake-up signals in the first time window, the identifier that is of the terminal device and that is indicated by the wake-up signal detected later is larger than the identifier that is of the terminal device and that is indicated by the wake-up signal detected earlier; and when the terminal device detects at least two wake-up signals in the first time period, an identifier that is of a terminal device and that is indicated by a wake-up signal detected later is smaller than an identifier that is of a terminal device and that is indicated by a wake-up signal detected earlier.

Optionally, when the terminal device detects the at least two wake-up signals in the first time window, the identifier that is of the terminal device and that is indicated by the wake-up signal detected later is smaller than the identifier that is of the terminal device and that is indicated by the wake-up signal detected earlier; and when the terminal device detects at least two wake-up signals in the first time period, an identifier that is of a terminal device and that is indicated by a wake-up signal detected later is larger than an identifier that is of a terminal device and that is indicated by a wake-up signal detected earlier.

Optionally, the transceiver unit 1410 is specifically configured to detect first information in the first time window, where the first information indicates to stop monitoring the wake-up signal. The terminal device skips, based on the first information, monitoring the wake-up signal in the first time period, or stops monitoring the wake-up signal in the first time window and skips monitoring the wake-up signal in the first time period.

Optionally, a start position of the first time period is the same as an end position of the first time window.

Optionally, an end position of the first time window overlaps a start position of a second time window, or an end position of the first time window precedes a start position of a second time window. The second time window is a corresponding time window when a second terminal device monitors the wake-up signal, and the first time window and the second time window are adjacent time windows.

Optionally, the transceiver unit 1410 is further configured to receive configuration information, where the configuration information includes at least one of the following: information about the first time window or information about the first time period.

Optionally, a time length of the first time period is the same as a time length of the first time window.

The apparatus 1400 may implement a step or a procedure performed by the terminal device based on the method embodiments in embodiments of this application. The apparatus 1400 may include a unit configured to perform the method performed by the terminal device in the embodiment shown in FIG. 4.

It should be understood that a specific process of performing the foregoing corresponding step by each unit is described in detail in the foregoing method embodiments. For brevity, details are not described herein again.

In another possible implementation, the transceiver unit 1410 is configured to monitor a wake-up signal in a first time window, where the wake-up signal indicates information about at least one terminal device that needs to be woken up. The processing unit 1420 is configured to determine, based on a result of monitoring the wake-up signal in a part of duration in the first time window, whether to continue monitoring the wake-up signal in the first time window.

Optionally, the information about the at least one terminal device that needs to be woken up is an identifier of the at least one terminal device that needs to be woken up. The transceiver unit 1410 is specifically configured to detect the wake-up signal in the first time window, where an identifier that is indicated by the wake-up signal and that is of the at least one terminal device that needs to be woken up includes a first identifier. The processing unit 1420 is specifically configured to determine, based on an identifier of the terminal device and the first identifier, whether to continue monitoring the wake-up signal in the first time window.

Optionally, when the terminal device detects at least two wake-up signals in the first time window, an identifier that is of a terminal device and that is indicated by a wake-up signal detected later is larger than an identifier that is of a terminal device and that is indicated by a wake-up signal detected earlier.

Optionally, if the identifier of the terminal device is larger than the first identifier, the transceiver unit 1410 is further configured to continue monitoring the wake-up signal in the first time window; or if the identifier of the terminal device is smaller than the first identifier, the terminal device stops monitoring the wake-up signal in the first time window.

Optionally, when the terminal device detects at least two wake-up signals in the first time window, an identifier that is of a terminal device and that is indicated by a wake-up signal detected later is smaller than an identifier that is of a terminal device and that is indicated by a wake-up signal detected earlier.

Optionally, if the identifier of the terminal device is smaller than the first identifier, the transceiver unit 1410 is further configured to continue monitoring the wake-up signal in the first time window; or if the identifier of the terminal device is larger than the first identifier, the terminal device stops monitoring the wake-up signal in the first time window.

Optionally, when the terminal device detects at least two wake-up signals in the first time window of a first periodicity, an identifier that is of a terminal device and that is indicated by a wake-up signal detected later is larger than an identifier that is of a terminal device and that is indicated by a wake-up signal detected earlier; and when the terminal device detects at least two wake-up signals in the first time window of a second periodicity, an identifier that is of a terminal device and that is indicated by a wake-up signal detected later is smaller than an identifier that is of a terminal device and that is indicated by a wake-up signal detected earlier. The first periodicity and the second periodicity are adjacent.

Optionally, when the terminal device detects at least two wake-up signals in the first time window of a first periodicity, an identifier that is of a terminal device and that is indicated by a wake-up signal detected later is smaller than an identifier that is of a terminal device and that is indicated by a wake-up signal detected earlier; and when the terminal device detects at least two wake-up signals in the first time window of a second periodicity, an identifier that is of a terminal device and that is indicated by a wake-up signal detected later is larger than an identifier that is of a terminal device and that is indicated by a wake-up signal detected earlier. The first periodicity and the second periodicity are adjacent.

Optionally, the transceiver unit 1410 is specifically configured to detect first information in the first time window, where the first information indicates to stop monitoring the wake-up signal. The terminal device stops, based on the first information, monitoring the wake-up signal in the first time window.

Optionally, an end position of the first time window overlaps a start position of a second time window, or an end position of the first time window precedes a start position of a second time window. The second time window is a corresponding time window when a second terminal device monitors the wake-up signal, and the first time window and the second time window are adjacent time windows.

Optionally, the transceiver unit 1410 is further configured to receive configuration information, where the configuration information includes information about the first time window.

The apparatus 1400 may implement a step or a procedure performed by the terminal device based on the method embodiments in embodiments of this application. The apparatus 1400 may include a unit configured to perform the method performed by the terminal device in the embodiment shown in FIG. 11.

It should be understood that a specific process of performing the foregoing corresponding step by each unit is described in detail in the foregoing method embodiments. For brevity, details are not described herein again.

It should be further understood that the apparatus 1400 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 1400 may be specifically the terminal device in the foregoing embodiments, and may be configured to perform procedures and/or steps corresponding to the terminal device in the foregoing method embodiments. To avoid repetition, details are not described herein again.

The apparatus 1400 in the foregoing solutions has functions of implementing corresponding steps performed by the terminal device in the foregoing methods. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, respectively performing receiving and sending operations and a related processing operation in each method embodiment.

In addition, the transceiver unit 1410 may alternatively be a transceiver circuit (for example, may include a receiver circuit and a transmitter circuit), and the processing unit may be a processing circuit.

It should be noted that the apparatus in FIG. 14 may be a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

As shown in FIG. 15, an embodiment of this application provides another communication apparatus 1500. The apparatus 1500 includes a processor 1510. The processor 1510 is coupled to a memory 1520. The memory 1520 is configured to store a computer program or instructions and/or data. The processor 1510 is configured to execute the computer program or the instructions stored in the memory 1520, or read data stored in the memory 1520, to perform the methods in the foregoing method embodiments.

Optionally, there is at least one processor 1510.

Optionally, there is at least one memory 1520.

Optionally, the memory 1520 and the processor 1510 are integrated or disposed separately.

Optionally, as shown in FIG. 15, the apparatus 1500 further includes a transceiver 1530. The transceiver 1530 is configured to receive and/or send a signal. For example, the processor 1510 is configured to control the transceiver 1530 to receive and/or send a signal.

In a solution, the apparatus 1500 is configured to implement an operation performed by the terminal device in the foregoing method embodiments.

For example, the processor 1510 is configured to execute the computer program or the instructions stored in the memory 1520, to implement a related operation of the terminal device in the foregoing method embodiments, for example, the method performed by the terminal device in the embodiment shown in FIG. 4, or the method performed by the terminal device in the embodiment shown in FIG. 11.

It should be understood that, the processor in embodiments of this application may be a central processing unit (central processing unit, CPU), or may alternatively be another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general purpose processor may be a microprocessor, or the processor may be any conventional processor or the like.

It should be further understood that the memory in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms as follows: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

As shown in FIG. 16, an embodiment of this application provides a chip system 1600. The chip system 1600 (or may also be referred to as a processing system) includes a logic circuit 1610 and an input/output interface (input/output interface) 1620.

The logic circuit 1610 may be a processing circuit in the chip system 1600. The logic circuit 1610 may be coupled to and connected to a storage unit, and invoke instructions in the storage unit, to enable the chip system 1600 to implement the methods and functions in embodiments of this application. The input/output interface 1620 may be an input/output circuit in the chip system 1600, and outputs information processed by the chip system 1600, or inputs to-be-processed data or signaling information into the chip system 1600 for processing.

Specifically, for example, if the chip system 1600 is installed in a terminal device, the logic circuit 1610 is coupled to the input/output interface 1620, and the input/output interface 1620 may input a wake-up signal to the logic circuit 1610 for processing.

In a solution, the chip system 1600 is configured to implement an operation performed by the terminal device in the foregoing method embodiments.

For example, the logic circuit 1610 is configured to implement processing-related operations performed by the terminal device in the foregoing method embodiments, for example, processing-related operations performed by the terminal device in the embodiment shown in FIG. 4, or processing-related operations performed by the terminal device in the embodiment shown in FIG. 11. The input/output interface 1620 is configured to implement sending-and/or receiving-related operations performed by the terminal device in the foregoing method embodiments, for example, sending-and/or receiving-related operations performed by the terminal device in the embodiment shown in FIG. 4, or sending-and/or receiving-related operations performed by the terminal device in the embodiment shown in FIG. 11.

An embodiment of this application further provides a computer-readable storage medium. The computer-readable storage medium stores computer instructions for implementing the method performed by the terminal device in the foregoing method embodiments.

For example, when a computer program is executed by a computer, the computer is enabled to implement the method performed by the terminal device in the foregoing method embodiments.

An embodiment of this application further provides a computer program product, including instructions. When the instructions are executed by a computer, the method performed by the terminal device in the foregoing method embodiments is implemented.

An embodiment of this application further provides a communication system. The communication system includes the terminal device and the network device in the foregoing embodiments.

For explanations and beneficial effects of related content in any apparatus provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by software, hardware, firmware, or any combination thereof. When software is used to implement embodiments, all or some of embodiments may be implemented in a form of a computer program product. The computer program product includes at least one computer instruction. When the computer program instructions are loaded and executed on a computer, all or some of the procedures or functions according to embodiments of this application are generated. The computer may be a general purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating at least one usable media. The usable medium may be a magnetic medium (for example, a floppy disk, a hard disk, or a magnetic tape), an optical medium (for example, a DVD), or a semiconductor medium (for example, a solid-state drive (solid-state drive, SSD)). For example, the usable medium includes but is not limited to various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, wherein the method comprises:

   monitoring, by a terminal device, a wake-up signal in a first time window, wherein the wake-up signal indicates information about at least one terminal device that needs to be woken up; and
   determining, by the terminal device based on a result of monitoring the wake-up signal in the first time window, whether to monitor the wake-up signal in a first time period after the first time window.

2. The method according to claim 1, wherein the first time window comprises N time units, and N is an integer greater than 1 or equal to 1; and
   the determining, by the terminal device based on a result of monitoring the wake-up signal in the first time window, whether to monitor the wake-up signal in a first time period after the first time window comprises:

   if the terminal device detects the wake-up signal in each time unit in the first time window, monitoring, by the terminal device, the wake-up signal in the first time period; or
   if the terminal device detects no wake-up signal in at least one time unit in the first time window, skipping, by the terminal device, monitoring the wake-up signal in the first time period.

3. The method according to claim 1, wherein the first time window comprises N time units, and N is an integer greater than 1 or equal to 1; and
   the determining, by the terminal device based on a result of monitoring the wake-up signal in the first time window, whether to monitor the wake-up signal in a first time period after the first time window comprises:

   if the terminal device detects no wake-up signal in last N1 time units in the first time window, skipping, by the terminal device, monitoring the wake-up signal in the first time period; or
   if the terminal device detects the wake-up signal in last N1 time units in the first time window, monitoring, by the terminal device, the wake-up signal in the first time period, wherein
   N1 is an integer greater than 1 or equal to 1, and N1 is less than N.

4. The method according to claim 1, wherein the first time window comprises N time units, and N is an integer greater than 1 or equal to 1; and
   the determining, by the terminal device based on a result of monitoring the wake-up signal in the first time window, whether to monitor the wake-up signal in a first time period after the first time window comprises:

   if the terminal device detects no wake-up signal in N2 time units in the first time window, skipping, by the terminal device, monitoring the wake-up signal in the first time period; or
   if the terminal device detects the wake-up signal in N2 time units in the first time window, monitoring, by the terminal device, the wake-up signal in the first time period, wherein
   N2 is an integer greater than 1 or equal to 1, and N2 is less than N.

5. The method according to claim 1, wherein the information about the at least one terminal device that needs to be woken up is an identifier of the at least one terminal device that needs to be woken up;
   the monitoring, by a terminal device, a wake-up signal in a first time window comprises:

   detecting, by the terminal device, the wake-up signal in the first time window, wherein the identifier that is indicated by the wake-up signal and that is of the at least one terminal device that needs to be woken up comprises a first identifier; and
   the determining, by the terminal device based on a result of monitoring the wake-up signal in the first time window, whether to monitor the wake-up signal in a first time period after the first time window comprises:
   determining, by the terminal device based on an identifier of the terminal device and the first identifier, whether to monitor the wake-up signal in the first time period.

6. The method according to claim 5, wherein when the terminal device detects at least two wake-up signals in the first time window, an identifier that is of a terminal device and that is indicated by a wake-up signal detected later is larger than an identifier that is of a terminal device and that is indicated by a wake-up signal detected earlier.

7. The method according to claim 5 or 6, wherein

the determining, by the terminal device based on an identifier of the terminal device and the first identifier, whether to monitor the wake-up signal in the first time period comprises:

if the identifier of the terminal device is larger than the first identifier, monitoring, by the terminal device, the wake-up signal in the first time period; or
if the identifier of the terminal device is smaller than the first identifier, skipping, by the terminal device, monitoring the wake-up signal in the first time period, or stopping, by the terminal device, monitoring the wake-up signal in the first time window and skipping monitoring the wake-up signal in the first time period.

8. The method according to claim 5, wherein when the terminal device detects at least two wake-up signals in the first time window, an identifier that is of a terminal device and that is indicated by a wake-up signal detected later is smaller than an identifier that is of a terminal device and that is indicated by a wake-up signal detected earlier.

9. The method according to claim 5 or 8, wherein
the determining, by the terminal device based on an identifier of the terminal device and the first identifier, whether to monitor the wake-up signal in the first time period comprises:

if the identifier of the terminal device is smaller than the first identifier, monitoring, by the terminal device, the wake-up signal in the first time period; or
if the identifier of the terminal device is larger than the first identifier, skipping, by the terminal device, monitoring the wake-up signal in the first time period, or stopping, by the terminal device, monitoring the wake-up signal in the first time window and skipping monitoring the wake-up signal in the first time period.

10. The method according to any one of claims 5 to 7, wherein when the terminal device detects the at least two wake-up signals in the first time window, the identifier that is of the terminal device and that is indicated by the wake-up signal detected later is larger than the identifier that is of the terminal device and that is indicated by the wake-up signal detected earlier; and when the terminal device detects at least two wake-up signals in the first time period, an identifier that is of a terminal device and that is indicated by a wake-up signal detected later is smaller than an identifier that is of a terminal device and that is indicated by a wake-up signal detected earlier.

11. The method according to claim 5, 8, or 9, wherein when the terminal device detects the at least two wake-up signals in the first time window, the identifier that is of the terminal device and that is indicated by the wake-up signal detected later is smaller than the identifier that is of the terminal device and that is indicated by the wake-up signal detected earlier; and when the terminal device detects at least two wake-up signals in the first time period, an identifier that is of a terminal device and that is indicated by a wake-up signal detected later is larger than an identifier that is of a terminal device and that is indicated by a wake-up signal detected earlier.

12. The method according to claim 1 or any one of claims 5 to 11, wherein the monitoring, by a terminal device, a wake-up signal in a first time window comprises:

detecting, by the terminal device, first information in the first time window, wherein the first information indicates to stop monitoring the wake-up signal; and
the determining, by the terminal device based on a result of monitoring the wake-up signal in the first time window, whether to monitor the wake-up signal in a first time period after the first time window comprises:
skipping, by the terminal device based on the first information, monitoring the wake-up signal in the first time period, or stopping monitoring the wake-up signal in the first time window and skipping monitoring the wake-up signal in the first time period.

13. The method according to any one of claims 1 to 12, wherein
a start position of the first time period is the same as an end position of the first time window.

14. The method according to any one of claims 1 to 13, wherein

the end position of the first time window overlaps a start position of a second time window, or the end position of the first time window precedes a start position of a second time window, wherein
the second time window is a corresponding time window when a second terminal device monitors the wake-up signal, and the first time window and the second time window are adjacent time windows.

15. The method according to any one of claims 1 to 14, wherein the method further comprises:
receiving, by the terminal device, configuration information, wherein the configuration information comprises at least one of the following: information about the first time window or information about the first time period.

16. The method according to any one of claims 1 to 15, wherein
a time length of the first time period is the same as a time length of the first time window.

17. A signal transmission method, wherein the method comprises:

monitoring, by a terminal device, a wake-up signal in a first time window, wherein the wake-up signal indicates information about at least one terminal device that needs to be woken up; and
determining, by the terminal device based on a result of monitoring the wake-up signal in a part of duration in the first time window, whether to continue monitoring the wake-up signal in the first time window.

18. The method according to claim 17, wherein the information about the at least one terminal device that needs to be woken up is an identifier of the at least one terminal device that needs to be woken up;
the monitoring, by a terminal device, a wake-up signal in a first time window comprises:

detecting, by the terminal device, the wake-up signal in the first time window, wherein the identifier that is indicated by the wake-up signal and that is of the at least one terminal device that needs to be woken up comprises a first identifier; and
the determining, by the terminal device based on a result of monitoring the wake-up signal in a part of duration in the first time window, whether to continue monitoring the wake-up signal in the first time window comprises:
determining, by the terminal device based on an identifier of the terminal device and the first identifier, whether to continue monitoring the wake-up signal in the first time window.

19. The method according to claim 18, wherein when the terminal device detects at least two wake-up signals in the first time window, an identifier that is of a terminal device and that is indicated by a wake-up signal detected later is larger than an identifier that is of a terminal device and that is indicated by a wake-up signal detected earlier.

20. The method according to claim 18 or 19, wherein
the determining, by the terminal device based on an identifier of the terminal device and the first identifier, whether to continue monitoring the wake-up signal in the first time window comprises:

if the identifier of the terminal device is larger than the first identifier, continuing, by the terminal device, monitoring the wake-up signal in the first time window; or
if the identifier of the terminal device is smaller than the first identifier, stopping, by the terminal device, monitoring the wake-up signal in the first time window.

21. The method according to claim 18, wherein when the terminal device detects at least two wake-up signals in the first time window, an identifier that is of a terminal device and that is indicated by a wake-up signal detected later is smaller than an identifier that is of a terminal device and that is indicated by a wake-up signal detected earlier.

22. The method according to claim 18 or 21, wherein
the determining, by the terminal device based on an identifier of the terminal device and the first identifier, whether to continue monitoring the wake-up signal in the first time window comprises:

if the identifier of the terminal device is smaller than the first identifier, continuing, by the terminal device, monitoring the wake-up signal in the first time window; or
if the identifier of the terminal device is larger than the first identifier, stopping, by the terminal device, monitoring the wake-up signal in the first time window.

23. The method according to any one of claims 18 to 20, wherein when the terminal device detects at least two wake-up signals in the first time window of a first periodicity, an identifier that is of a terminal device and that is indicated by a wake-up signal detected later is larger than an identifier that is of a terminal device and that is indicated by a wake-up signal detected earlier; and when the terminal device detects at least two wake-up signals in the first time window of a second periodicity, an identifier that is of a terminal device and that is indicated by a wake-up signal detected later is smaller than an identifier that is of a terminal device and that is indicated by a wake-up signal detected earlier, wherein

the first periodicity and the second periodicity are adjacent.

24. The method according to claim 18, 21, or 22, wherein when the terminal device detects at least two wake-up signals in the first time window of a first periodicity, an identifier that is of a terminal device and that is indicated by a wake-up signal detected later is smaller than an identifier that is of a terminal device and that is indicated by a wake-up signal detected earlier; and when the terminal device detects at least two wake-up signals in the first time window of a second periodicity, an identifier that is of a terminal device and that is indicated by a wake-up signal detected later is larger than an identifier that is of a terminal device and that is indicated by a wake-up signal detected earlier, wherein the first periodicity and the second periodicity are adjacent.

25. The method according to any one of claims 17 to 24, wherein the monitoring, by a terminal device, a wake-up signal in a first time window comprises:

detecting, by the terminal device, first information in the first time window, wherein the first information indicates to stop monitoring the wake-up signal; and
the determining, by the terminal device based on a result of monitoring the wake-up signal in a part of duration in the first time window, whether to continue monitoring the wake-up signal in the first time window comprises:
stopping, by the terminal device based on the first information, monitoring the wake-up signal in the first time window.

26. The method according to any one of claims 17 to 25, wherein

an end position of the first time window overlaps a start position of a second time window, or an end position of the first time window precedes a start position of a second time window, wherein
the second time window is a corresponding time window when a second terminal device monitors the wake-up signal, and the first time window and the second time window are adjacent time windows.

27. The method according to any one of claims 17 to 26, wherein the method further comprises:
receiving, by the terminal device, configuration information, wherein the configuration information comprises information about the first time window.

28. A communication apparatus, comprising:
a processor, configured to execute a computer program stored in a memory, to enable the apparatus to perform the method according to any one of claims 1 to 27.

29. The apparatus according to claim 28, wherein the apparatus further comprises the memory and/or a communication interface, and the communication interface is coupled to the processor; and
the communication interface is configured to input and/or output information.

30. A computer-readable storage medium, wherein the computer-readable storage medium stores a computer program; and when the computer program is run on a computer, the computer is enabled to perform the method according to any one of claims 1 to 27.

31. A computer program product, wherein the computer program product comprises instructions for performing the method according to any one of claims 1 to 27.

FIG. 1

FIG. 2

FIG. 3

400

```
A terminal device monitors a wake-up signal in a first time
window, where the wake-up signal indicates information about at
least one terminal device that needs to be woken up
```
410

```
The terminal device determines, based on a result of monitoring
the wake-up signal in the first time window, whether to monitor
the wake-up signal in a first time period after the first time
window
```
420

FIG. 4

| 1 | 2 | 3 |
|---|---|---|

Time unit 1    Time unit 2    Time unit 3

(1)

| 1 | 2 | 3 | 1 | 2 | 3 |
|---|---|---|---|---|---|

Time unit 1    Time unit 2    Time unit 3

(2)

FIG. 5

Continue monitoring

First time window               First time period

(1)

Skip monitoring

First time window               First time period

(2)

Detect a              Detect no
wake-up signal       wake-up signal

FIG. 6

Last time unit

Continue monitoring

First time window          First time period

(1)

Last time unit

Skip monitoring

First time window          First time period

(2)

Detect a
wake-up signal

Detect no
wake-up signal

FIG. 7

Last two time units

Continue monitoring

First time window

First time period

(1)

Last two time units

Continue monitoring

First time window

First time period

(2)

Last two time units

Skip monitoring

First time window

First time period

(3)

Detect a
wake-up signal

Detect no
wake-up signal

FIG. 8

First time period

First time window | Second time window | Third time window | Fourth time window

(1)

First time period

First time window | Second time window | Third time window | Fourth time window

(2)

First time period

First time window | Second time window | Third time window | Fourth time window

(3)

FIG. 9

First time window | First time period | Second time window | Second time period | Third time window

FIG. 10

1100

A terminal device monitors a wake-up signal in a first time window, where the wake-up signal indicates information about at least one terminal device that needs to be woken up

1110

The terminal device determines, based on a result of monitoring the wake-up signal in a part of duration in the first time window, whether to continue monitoring the wake-up signal in the first time window

1120

FIG. 11

A paging ID is greater than a paging ID of a terminal device

Stop monitoring

Detect a wake-up signal

Detect no wake-up signal

First time window

FIG. 12

A paging ID is less than a paging ID of a terminal device

Stop monitoring

Detect a wake-up signal

Detect no wake-up signal

First time window

FIG. 13

1400

Transceiver unit 1410

Processing unit 1420

FIG. 14

1500

Processor 1510

Transceiver 1530

Memory 1520

FIG. 15

Chip system 1600

Logic circuit 1610

Input/Output
interface 1620

FIG. 16

## INTERNATIONAL SEARCH REPORT

| International application No. |
|---|
| **PCT/CN2023/090624** |

**A.    CLASSIFICATION OF SUBJECT MATTER**

H04W 52/02(2009.01)i

According to International Patent Classification (IPC) or to both national classification and IPC

**B.    FIELDS SEARCHED**

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, WPABSC, CJFD: 唤醒, 唤醒信号, 监测, 检测, 结果, 窗, 时间, wake up, wake up signal, monitor, result, time, window, wus, occasion

**C.    DOCUMENTS CONSIDERED TO BE RELEVANT**

| Category* | Citation of document, with indication, where appropriate, of the relevant passages | Relevant to claim No. |
|---|---|---|
| X | WO 2021062792 A1 (HUAWEI TECHNOLOGIES CO., LTD.) 08 April 2021 (2021-04-08) description, paragraphs [0067]-[0124], and claims 1-23 | 1, 5, 12-18, 25-31 |
| A | CN 114145050 A (LG ELECTRONICS INC.) 04 March 2022 (2022-03-04) entire document | 1-31 |
| A | KR 1020220047576 A (LG ELECTRONICS, INC.) 18 April 2022 (2022-04-18) entire document | 1-31 |
| A | WO 2021088087 A1 (HUAWEI TECHNOLOGIES CO., LTD.) 14 May 2021 (2021-05-14) entire document | 1-31 |
| A | HUAWEI; HISILICON. "R1-1910076 "PDCCH-based power saving signal/channel"" *3GPP tsg_ran\wg1_r11*, No. tsgr1_98b, 05 October 2019 (2019-10-05), entire document | 1-31 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 August 2023** | **09 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/090624**

| Patent document cited in search report | | | Publication date (day/month/year) | Patent family member(s) | | | Publication date (day/month/year) |
|---|---|---|---|---|---|---|---|
| WO | 2021062792 | A1 | 08 April 2021 | None | | | |
| CN | 114145050 | A | 04 March 2022 | WO | 2021010746 | A1 | 21 January 2021 |
| | | | | KR | 20210155809 | A | 23 December 2021 |
| | | | | EP | 3972353 | A1 | 23 March 2022 |
| | | | | EP | 3972353 | A4 | 27 July 2022 |
| | | | | US | 2022110054 | A1 | 07 April 2022 |
| | | | | US | 11638211 | B2 | 25 April 2023 |
| KR | 1020220047576 | A | 18 April 2022 | None | | | |
| WO | 2021088087 | A1 | 14 May 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210458433
- CN 202210600284